# EUROPEAN PATENT APPLICATION

(11) **EP 4 130 899 A1**
(43) Date of publication of application: **08.02.2023**
(21) Application number: 20928541.0
(22) Date of filing: 17.12.2020
(51) Int. Cl.: G05B 19/05

(54) **CONTROL DEVICE, PROGRAM, AND CONTROL METHOD**

(30) Priority: 31.03.2020 JP 2020062362
(71) Applicant: OMRON Corporation, Kyoto-shi, Kyoto 600-8530 (JP)
(72) Inventor: NAKANO, Masahiko, Kyoto-shi, Kyoto 600-8530 (JP); MIYAKE, Hiroki, Kyoto-shi, Kyoto 600-8530 (JP); OKURA, Takafumi, Kyoto-shi, Kyoto 600-8530 (JP); OTA, Masanori, Kyoto-shi, Kyoto 600-8530 (JP); JAKUNEN, Tetsushi, Kyoto-shi, Kyoto 600-8530 (JP)
(74) Representative: Mewburn Ellis LLP
(86) International application number: PCT/JP2020/047256
(87) International publication number: WO 2021/199519

(57) **Abstract**

A time during which system service is performed is secured within a control period. A control device includes: a first program for real time control having a highest priority of execution executed by a processor (102) in a predetermined period; a second program for processing related to real time control, the second program having a lower priority of execution than that of the first program; and a third program of a system service, the third program having a lower priority of execution than that of the second program, the third program executed when a spare time of the processor exists in the period, and a scheduler (25) causes the processor to interrupt the execution of the second program to start the execution of the third program when a predetermined type of an instruction code in the second program is executed.

## Description

### TECHNICAL FIELD

The present disclosure relates to a control device that executes a plurality of programs having different priorities.

### BACKGROUND ART

A factory automation (FA) technology using a control device such as a programmable logic controller (PLC) is widely used in various production sites. In such a control device, there is a need to execute a plurality of types of programs within a control period. Japanese Patent Laying-Open No. 2019-36043 (PTL 1) discloses a control device that sequentially executes a plurality of tasks according to a priority of each task.

### CITATION LIST

### PATENT LITERATURE

PTL 1: Japanese Patent Laying-Open No. 2019-36043

### SUMMARY OF INVENTION

### TECHNICAL PROBLEM

In the control device such as the PLC, the priority of the execution of a program controlling a control target is set to be high. On the other hand, a program related to a system service different from what is called control is set to have a low priority of the execution and executed in a spare time of the control period.

As the control becomes more complicated, an execution time of the control program becomes longer, and there is a tendency that there is no spare time within the control period. On the other hand, there is a need to secure a time for implementing a system service. Accordingly, a mechanism capable of securing a time during which system service can be implemented within a predetermined period is desired.

### SOLUTION TO PROBLEM

A control device according to the present disclosure that controls a control target, the control device includes: a processor; a storage configured to store a plurality of programs; and a scheduler configured to manage a program executed by the processor according to a priority within a predetermined period. The plurality of programs in the storage includes a first program for real time control processing of the control target, the first program having a highest priority of execution executed by the processor in the period, a second program for related processing related to real time control, the second program having a lower priority of execution than that of the first program, and a third program of a system service, the third program having a lower priority of execution than that of the second program and executed when a spare time of the processor exists in the period, and the scheduler includes a switching unit that causes the processor to interrupt the execution of the second program to start the execution of the third program when the execution of the second program is started and then when a predetermined type of an instruction code is executed in the second program within the period.

According to the above disclosure, the switching unit of the scheduler starts the execution of the second program when causing the processor to execute the program according to the priority within the period, and the switching unit of the scheduler causes the processor to interrupt the execution of the second program to start the execution of the third program when the predetermined type of the instruction code in the second program is executed thereafter. Thus, the time during which the third program is executed within the period can be secured, and the system service can be performed within the period.

In the above disclosure, the real time control processing may include a processing for generating a command value to the control target based on an intermediate code generated by the related processing, and the predetermined type of the instruction code may include an instruction code that generates the intermediate code over a plurality of periods when being executed.

According to the above disclosure, even when the execution of the second program is interrupted, the command value can be generated based on the previously-generated intermediate code over the plurality of periods in the real time control processing.

In the above disclosure, the predetermined type of the instruction code may include a waiting instruction code described using a waiting condition and a code determining whether the waiting condition is satisfied.

According to the above disclosure, in the case where the related processing is in the waiting state until the waiting instruction code is executed to satisfy the waiting condition, the control device can cause the processor to interrupt the execution of the second program to start the execution of the third program.

In the above disclosure, the second program may include a program described in an interpreter language.

According to the above disclosure, the control device can determine whether the predetermined type of the instruction code is executed using the analysis result of the instruction code by the interpreter.

In the above disclosure, the system service may include processing of a time series database that stores a record including data related to the control target in time series.

According to the above disclosure, the control device interrupts the execution of the second program to start the execution of the third program, so that the processing time of the time series database that stores the record including the data related to the control target in time series can be secured within the period.

In the above disclosure, the control device may further includes: a data generation unit configured to generate data constituting a record stored in the time series database for each period; and a non-blocking queue formed on a volatile main storage device that sequentially stores the data generated by the data generation unit. The system service includes processing for reading the data from the non-blocking queue and storing the read data in the time series database.

According to the above disclosure, the data generated at a relatively high speed within the period can be stored in the time series database having a relatively low access speed through the non-blocking queue.

In the above disclosure, the control device may further includes the time series database.

According to the above disclosure, the control device can include the time series database in the control device.

In the above disclosure, the control device may further include a remaining amount monitoring unit configured to monitor a remaining memory amount of the non-blocking queue. The switching unit causes the processor to interrupt the execution of the currently-executed second program to start the execution of the third program based on a result of comparison between the remaining memory amount and a threshold.

According to the above disclosure, the control device can cause the processor to interrupt the execution of the currently-executed second program to start the execution of the third program based on the result of the comparison between the memory remaining amount of the non-blocking queue and the threshold.

In the above disclosure, the first program may include an instruction code of the related processing executed when the execution of the second program is interrupted.

According to the above disclosure, when the execution of the second program is interrupted, the control device can execute the instruction code of the related processing during the execution of the first program.

A program according to the present disclosure executed by a control device including a processor controlling a control target, the program include: a scheduler program configured to manage a program executed by the processor according to a priority within a predetermined period; a first program for real time control processing of the control target, the first program having a highest priority of execution executed by the processor in the period; a second program for related processing related to the real time control, the second program having a lower priority of execution than that of the first program; and a third program of a system service, the third program having a lower priority of execution than that of the second program and executed when a spare time of the processor exists in the period. The scheduler program includes a switch program that causes the processor to interrupt the execution of the second program to start the execution of the third program when the execution of the second program is started and then when a predetermined type of an instruction code is executed in the second program within the period.

According to this disclosure, the switch program is executed while the processor executes the program according to the priority, so that the time during which the third program is executed can be secured within the period. Thus, a mechanism capable of securing the time during which the system service can be implemented within the predetermined period can be provided.

A control method according to the present disclosure for controlling a control device including a processor controlling a control target, the control device including a first program for real time control processing of the control target, the first program having a highest priority of execution executed by the processor in a predetermined period, a second program for related processing related to the real time control, the second program having a lower priority of execution than that of the first program, and a third program of a system service, the third program having a lower priority of execution than that of the second program and executed when there is a spare time of a processor in the period, the control method includes managing a program executed by the processor according to a priority within the period. The managing step includes within the period, starting the execution of the second program and then determining whether a predetermined type of an instruction code is executed in the second program, and causing the processor to interrupt the execution of the second program to start the execution of the third program based on the determination.

According to this disclosure, the time during which the third program is executed within the period can be secured while the processor executes the program according to the priority. Thus, a mechanism capable of securing the time during which the system service can be implemented within the predetermined period can be provided.

### ADVANTAGEOUS EFFECTS OF INVENTION

According to this disclosure, the time during which the system service can be performed within the control period can be secured.

### BRIEF DESCRIPTION OF DRAWINGS

Fig. 1 is a view schematically illustrating an application example.
Fig. 2 is a schematic diagram illustrating an overall configuration example of a control system 1 according to an embodiment.
Fig. 3 is a block diagram illustrating a hardware configuration example of a control device 100 of the embodiment.
Fig. 4 is a block diagram illustrating a software configuration example of the control device 100 of the embodiment.
Fig. 5 is a schematic diagram illustrating a functional configuration example of the control device 100 of the embodiment.
Fig. 6 is a schematic diagram illustrating a main part of processing related to a time series database 180 in the control device 100 of the embodiment.
Fig. 7 is a view illustrating a data structure example of a record stored in the time series database 180 in the control device 100 of the embodiment.
Fig. 8 is a view illustrating a data structure example of the record stored in the time series database 180 in the control device 100 of the embodiment.
Fig. 9 is a schematic diagram illustrating a period control example in the control device 100 of the embodiment.
Fig. 10 is a schematic diagram illustrating a period control example in the control device 100 of the embodiment.
Fig. 11 is a schematic diagram illustrating a period control example in the control device 100 of the embodiment.
Fig. 12 is a schematic diagram illustrating a period control example in the control device 100 of the embodiment.
Fig. 13 is a flowchart schematically illustrating processing of a control application processing unit 30 of the embodiment.
Fig. 14 is a flowchart illustrating processing of a program analyzing unit 34 of the embodiment.
Fig. 15 is a table illustrating a correspondence between a type of an instruction code and a program code of the embodiment.
Fig. 16 is a flowchart schematically illustrating processing of a scheduler 25 of the embodiment.
Fig. 17 is a view schematically illustrating a part of a control application program 1542 of the embodiment.
Fig. 18 is a flowchart schematically illustrating processing of a switching unit 26 of the embodiment.
Fig. 19 is a view schematically illustrating an example of the instruction code executed by a control application processing unit 301 of the embodiment.
Fig. 20 is a view illustrating an application example using time-series data stored in the time series database 180 of the control device 100 of the embodiment.

### DESCRIPTION OF EMBODIMENT

Hereinafter, an embodiment of the present invention will be described with reference to the drawings. In the following description, the same components and constituents are denoted by the same reference numerals. Those names and functions are the same. Thus, the detailed description thereof will not be repeated.

### <A. Application example>

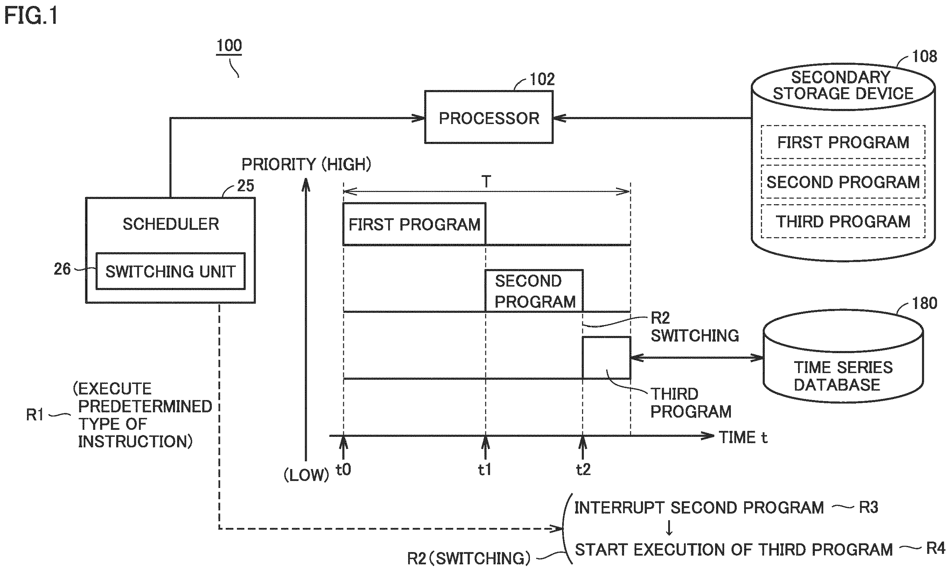

Fig. 1 is a view schematically illustrating an application example. With reference to Fig. 1, an example of a scene to which the present invention is applied will be described. With reference to Fig. 1, a control device 100 that controls a control target provided at an FA production site includes a processor 102, a secondary storage device 108 such as a hard disc drive (HDD), a scheduler 25, and a time series database 180. Control device 100 includes a controller such as the PLC. The "control target" includes a machine or a facility and a sensor that are provided in a production line of FA to become a control target. The machine or facility includes a mechanical mechanism such as a robot, a table, or a conveyor.

Scheduler 25 manages a program executed by processor 102 according to a priority within a predetermined period. Time series database 180 is configured to store a record including data related to the control target generated for each period in a time series in a storage. In the embodiment, the predetermined period corresponds to a control cycle T.

Secondary storage device 108 stores a plurality of programs so as to be readable by processor 102. The program stored in secondary storage device 108 includes a first program, a second program, and a third program. The first program is a program having the highest priority of execution executed by processor 102 in control cycle T, and is executed for real time control processing of the control target. The second program is a program having a lower priority of execution than the first program, and is executed for related processing related to real time control. The third program is a program of a system service having a lower priority of the execution than the second program, and is executed when processor 102 has a spare time in control cycle T. In the embodiment, the spare time of processor 102 indicates a period of an idle state in which processor 102 does not execute the program (process, task).

For example, the first program includes an "IEC program". The IEC program is a term including a program that is entirely scanned every execution and calculates one or a plurality of command values every execution. The IEC program typically includes a program including one or the plurality of commands written according to International Standard IEC 61131-3 defined by International Electrotechnical Commission (IEC). The IEC program may include an instruction of a logic processing unit for sequence control and a motion processing unit for motion control. In the IEC program, all programs are executed (scanned) in each control cycle T. The IEC program is suitable for control requiring immediacy and high speed, such as real time control of a target. The IEC program is not limited to the instruction described in accordance with the international standard IEC 61131-3, but may include the instruction independently defined by a manufacturer or vendor of the PLC.

The logic processing unit of the sequence control is basically a system that sequentially executes a program (sequence program) described by one or a plurality of logic circuits that operate an input value, an output value, an internal value, and the like from a head to a last. In one control cycle T, the program is executed from the head to the last, and in the next control cycle T, the program is executed again from the head to the last. The sequence program is a program representing an electric circuit.

The motion processing unit of the motion control includes processing for calculating a numerical value such as a position, a speed, an acceleration, a jerk, an angle, an angular velocity, an angular acceleration, and an angular jerk as the command value with respect to an actuator such as a servo motor included in the control target according to an intermediate code output by a control application processing unit described later. Also in the motion control, the head to the last of a program (motion processing program) described by a function block, a numerical operation expression, or the like is executed in one control cycle T. That is, the command value is operated (updated) every control cycle T. Because the intermediate code used by the motion processing unit often includes instruction(s) that can operate the command value over a plurality of control cycles T, the timing at which the motion processing unit acquires the intermediate code may not be each control cycle T.

The second program includes a control application program. As the control application program is executed by the control application processing unit, for example, a device or a machine that performs specific machining or operation using computer numerical control (CNC) and/or an industrial robot, and processing related to the control thereof can be implemented.

The second program includes a program including one or a plurality of instructions for implementing related processing related to real time control of the control target, and basically includes a program such as a control application program not included in the "IEC program". As an example, the second program is described using a G language in the CNC, and is described using a robot language in an industrial robot control. These languages include an interpreter language. The second program described in the interpreter language is executed by an interpreter system that sequentially interprets and executes an instruction code. The second program is not limited to the program described in the interpreter language, but may be described in a language of the IEC program similar to the first program.

Processor 102 provides an interpreter by executing an interpreter program. The interpreter interprets one or a plurality of instruction codes described in the second program, and generates the intermediate code for which the motion processing unit operates the command value in each control cycle T based on the interpreted content. Because the intermediate code is generated for each of one or the plurality of instruction codes described in the second program, a plurality of intermediate codes are often generated from one second program. Generation of such the intermediate code may be included in the related processing described above.

In each of the intermediate codes, a function that can operate the command value with time of day (or time) of control cycle T as input can be defined. That is, the intermediate code may be a function operating the command value by the motion processing unit for each control cycle T. Using such the function, the motion processing unit can calculate the command value in each control cycle T by sequentially referring to the intermediate code generated by the second program.

Scheduler 25 causes processor 102 to execute the first program, the second program, and the third program according to the priority of each program within control cycle T. The priority indicating a degree to which the program should be preferentially executed over other programs is set in each of the first to third programs. In control cycle T of the second program and the third program, processor 102 starts the execution of the first program (time t0), and starts the execution of the second program when the execution of the first program ends (time 11). Thereafter, when a predetermined type of instruction code is executed in the second program (step R1), switching unit 26 included in scheduler 25 switches the program to be executed by processor 102 (step R2, time t2). In the switching, switching unit 26 causes processor 102 to stop the execution of the second program and start the execution of the third program (steps R3, R4).

When the execution of the second program is interrupted in this manner, the spare time of processor 102 is provided within control cycle T, and the third program is executed in this spare time. Thus, the time during which the system service can be implemented can be secured within control cycle T.

For example, the system service may include processing of time series database 180. Accordingly, the processing time of time series database 180 can be secured within control cycle T.

### <B. Overall configuration example of control system>

An overall configuration example of control system 1 including the control device of the embodiment.

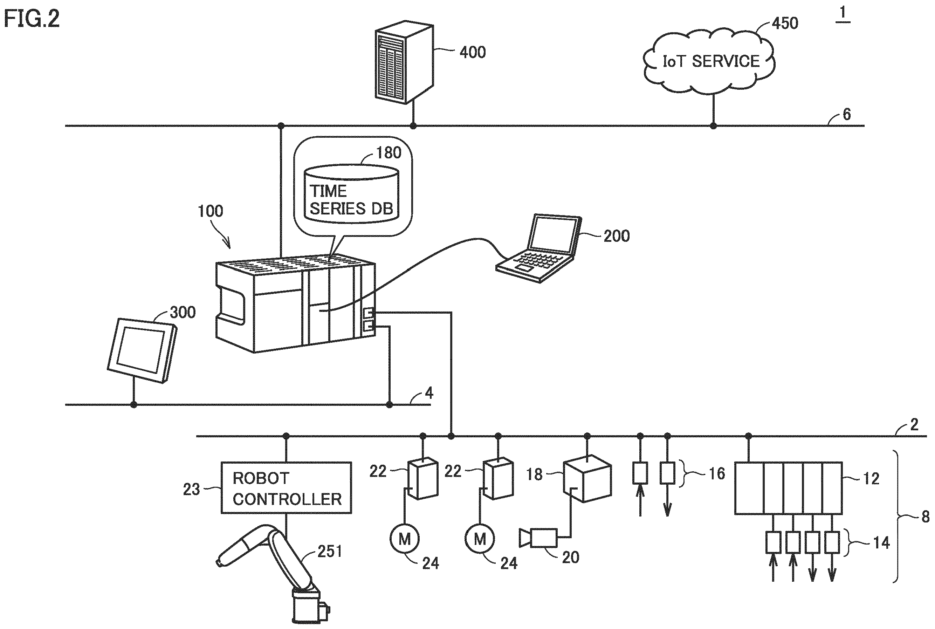

Fig. 2 is a schematic diagram illustrating the overall configuration example of control system 1 of the embodiment. With reference to Fig. 2, control system 1 of the embodiment includes control device 100 that controls the control target as a main component.

Control device 100 may be embodied as a kind of computer such as the PLC. Control device 100 is connected to a field device group 8 through a field bus 2, and connected to one or a plurality of display devices 300 through a field bus 4. Control device 100 exchanges data with a connected device through each bus or network. The "field bus" is also generally referred to as a "field network", but is collectively referred to as a "field bus" in the following description for simplification of description. That is, the "field bus" of the embodiment may include a "field network" in addition to the "field bus".

Control device 100 performs control arithmetic operation executing various operations controlling the manufacturing device and facility. In addition to the control arithmetic processing, control device 100 performs input/output processing for acquiring the data (hereinafter, also referred to as "input data") measured by field device group 8 and transferred to control device 100 and various data calculated by the control arithmetic processing.

Control device 100 further includes time series database 180. As described later, time series database 180 stores various data acquired by the input/output processing in time series. In Fig. 2, time series database 180 is indicated as a time series DB 180.

Specifically, control device 100 performs data generation processing for generating the record including the data related to the designated control target, and time series database 180 stores the data generated by the data generation processing in time series.

The group of records stored in time series database 180 is also referred to as "time series data". In the present specification, the "time-series data" means a series of values obtained by continuously (alternatively, discontinuous at regular intervals) observing a temporal change of data (observation value) for an arbitrary object.

In the present specification, the "observation value" is a concept that collectively refers to the value (actual value) available in the control operation in control device 100, and typically, can include the value (such as a measurement value acquired from the field) acquired from the control target and input to the control operation, an output value (such as the command value given to the field) for the control target determined by the control calculation based on the acquired input value, an arithmetic value (arbitrary variable value) calculated in the process of the control operation, and the like. That is, the "observation value" includes an arbitrary value that can be stored as the data in control device 100 or can be externally output as the data from control device 100.

Field bus 2 and field bus 4 preferably adopt the bus or the network that performs constant periodic communication in which the arrival time of the data is guaranteed. EtherCAT (registered trademark) and the like are known as the bus or the network that performs such the constant periodic communication. Alternatively, EtherNet/IP (registered trademark), DeviceNet (registered trademark), CompoNet (registered trademark), or the like may be adopted.

Field device group 8 includes a device that collects the input data from the control target or the manufacturing device related to the control, a production line, or the like (hereinafter, also collectively referred to as "field"). An input relay, various sensors (for example, an analog sensor, a temperature sensor, and a vibration sensor), and the like are assumed as the device that collects such the input data. Field device group 8 further includes a device that gives some action to the field based on a command (hereinafter, also referred to as "output data") generated by control device 100. An output relay, a contactor, a servo driver, a servo motor, and other arbitrary actuators are assumed as a device that exerts some action on such a field.

Field device group 8 exchanges the data including the input data and the output data with control device 100 through field bus 2. In the configuration example of Fig. 2, field device group 8 includes a remote input/output (I/O) device 12, a relay group 14, an image sensor 18 and a camera 20, a servo driver 22 and a servomotor 24, and an industrial robot 251 and a robot controller 23. Field device group 8 is not limited thereto, but any device may be adopted as long as the device can collect the input data or can perform some action based on the output data.

Remote I/O device 12 typically includes a communication coupler that conducts communication through field bus 2 and an input and output unit (hereinafter, also referred to as "I/O unit") that acquires the input data and outputs the output data. Through such the I/O unit, the input data and the output data are exchanged between control device 100 and the field. Fig. 2 illustrates an example in which a digital signal is exchanged as the input data and the output data through relay group 14.

The I/O unit may be directly connected to the field bus. Fig. 2 illustrates an example in which I/O unit 16 is directly connected to field bus 2.

Image sensor 18 performs image measurement processing such as pattern matching on the image data captured by camera 20, and outputs a processing result to control device 100.

Servo driver 22 drives servomotor 24 according to the output data (for example, a position instruction and a speed instruction) from control device 100.

As described above, the data is exchanged between control device 100 and field device group 8 through field bus 2, and the exchanged data is updated in a very short period of several 100 µsec order to several 10 msec order. The processing for updating such the exchanged data is also referred to as I/O refresh processing.

In addition, display device 300 connected to control device 100 through field bus 4 receives the operation from the user, outputs the command or the like corresponding to the user operation to control device 100, and graphically displays the arithmetic result or the like in control device 100.

A support device 200 may be connected to control device 100. Support device 200 is a device that supports preparation required for control device 100 to control the control target. Specifically, support device 200 provides a development environment (a program producing and editing tool, a parser, a compiler, and the like) of the program executed by control device 100, a setting environment setting parameters (configurations) of control device 100 and various devices connected to control device 100, a process of outputting a generated user program to control device 100, a process of correcting and changing the user program executed on control device 100 online, and the like.

Control device 100 further includes gateway processing for outputting the data acquired by the input/output processing and/or the data stored in time series database 180 to the external device.

As a typical example, a manufacturing execution system (MES) 400 and an Internet of Things (IoT) service 450 connected to control device 100 through higher-order network 6 are illustrated in Fig. 2 as the external device. Control device 100 can provide information from the manufacturing device or facility of the control target to these external systems or external services.

Manufacturing execution system 400 acquires the information from the manufacturing device or facility of the control target to monitor and manage the entire production, and can also handle order information, quality information, shipping information, and the like. A database storing information may be disposed inside manufacturing execution system 400 or in parallel with manufacturing execution system 400. Control device 100 can acquire manufacturing data indicating a manufacturing state or the like in the manufacturing device or facility of the control target from manufacturing execution system 400.

IoT service 450 is assumed to be a kind of cloud service including one or a plurality of computers connected to higher-order network 6 or connected to the Internet connected to higher-order network 6. The system constituting IoT service 450 is a system that performs communication processing, processes arbitrary information transmitted from control device 100 by one or a plurality of processors (for example, a central processing unit (CPU), a micro-processing unit (MPU), or a graphics processing unit (GPU)), and performs predetermined output.

It is assumed as IoT service 450 that a system acquires the information from the manufacturing device or facility of the control target to perform macro or micro analysis or the like. For example, data mining extracting some characteristic tendency included in the information from the manufacturing device or facility of the control target, a machine learning tool performing machine learning based on information from the facility or machine of the control target, and the like are assumed.

Control device 100 may be communicably connected to another control device 100.

### <C. Hardware configuration example of control device>

A hardware configuration example of control device 100 will be described below.

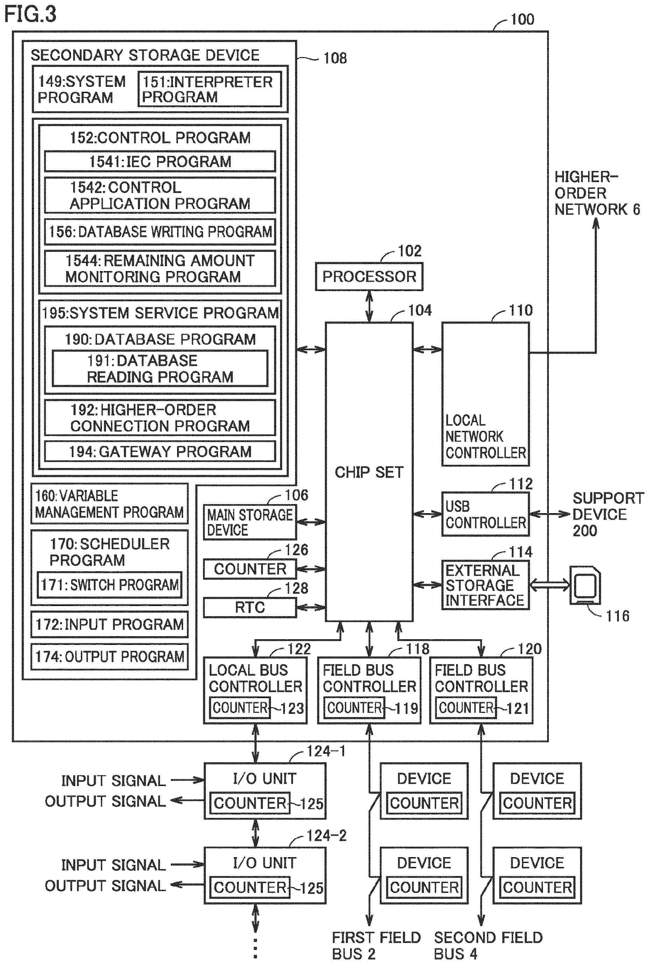

Fig. 3 is a block diagram illustrating a hardware configuration example of control device 100 of the embodiment. With reference to Fig. 3, control device 100 includes an arithmetic processing unit and one or a plurality of I/O units 124-1, 124-2,....

Control device 100 includes a processor 102, a chip set 104, a main storage device 106, a secondary storage device 108 corresponding to an internal storage, a higher-order network controller 110, a universal serial bus (USB) controller 112, an external storage interface 114, a local bus controller 122, field bus controllers 118, 120, a counter 126, and a real time clock (RTC) 128.

Processor 102 includes a CPU, an MPU, a GPU, or the like, and reads various programs stored in secondary storage device 108, deploys the programs in main storage device 106, and executes the programs, thereby implementing control according to the control target and various processes as described later. Secondary storage device 108 is configured of a nonvolatile storage device such as a hard disk drive (HDD) or a solid state drive (SSD). Main storage device 106 is configured of volatile storage device such as a dynamic random access memory (DRAM) or a static random access memory (SRAM).

Chip set 104 implements the processing of control device 100 as a whole by controlling processor 102 and each device.

In addition to system program implementing a basic function, a user program produced according to the control target or facility of the manufacturing device is stored in secondary storage device 108.

Higher-order network controller 110 exchanges the data with manufacturing execution system 400, IoT service 450 (see Fig. 2), and the like through higher-order network 6. Higher-order network controller 110 is typically implemented using a dedicated circuit such as an application specific integrated circuit (ASIC) or a field-programmable gate array (FPGA).

USB controller 112 controls the data exchange with support device 200 through a universal serial bus (USB) connection. USB controller 112 is typically implemented using a dedicated circuit such as an ASIC or a FPGA.

External storage interface 114 is configured such that an external storage 116 is detachably attached, and external storage interface 114 can write the data in external storage 116 and read various data (user programs, trace data, and the like) from external storage 116. For example, external storage 116 corresponds to a volatile storage device including a flash memory such as an SD card.

Counter 126 is used as the reference of the time of day at which the execution timing of various processes is managed in control device 100. Counter 126 typically increments or decrements the counter value every predetermined period. Counter 126 may be implemented using a high precision event timer (HPET) that is a hardware timer disposed on a system bus driving processor 102, or may be implemented using the dedicated circuit such as the ASIC or the FPGA.

RTC 128 is a kind of counter that performs a clocking operation, and provides the current time of day to processor 102 and the like.

Local bus controller 122 is an interface that exchanges the data with I/O units 124-1, 124-2,... mounted on control device 100. Local bus controller 122 is typically implemented using the dedicated circuit such as the ASIC or the FPGA, but may be implemented by the software implementation. When software implementation is adopted, local bus controller 122 is mainly constituted of a processor, a main storage device, a storage, and the like, and the processor reads a system program (firmware) and the like stored in the storage, develops the system program and the like in the main storage device, and executes the system program and the like, thereby implementing required processing.

Local bus controller 122 includes a counter 123 used as the reference of the time of day at which the timing is managed with I/O units 124-1, 124-2,..., which are another device connected through the local bus. Similarly, each of I/O units 124-1, 124-2,... also includes a counter 125 used as the reference of the time of day at which the timing is managed between local bus controller 122 and another I/O unit. The same configurations as those of counter 126 described above can be adopted for counter 123 and counter 125.

Field bus controller 118 controls the data exchange with another device through field bus 2. Typically, field bus controller 118 is implemented using a dedicated circuit such as the ASIC or the FPGA, but may be implemented by software implementation. When software implementation is adopted, field bus controller 118 is mainly constituted of a processor, a main storage device, a storage, and the like, and the processor reads a system program (firmware) and the like stored in the storage, develops the system program and the like in the main storage device, and executes the system program and the like, thereby implementing required processing. Field bus controller 118 includes a counter 119 used as the reference of the time of day at which the timing is managed with another device.

Similarly, field bus controller 120 exchanges the data with another device through field bus 4. Typically, field bus controller 120 is implemented using the dedicated circuit such as the ASIC or the FPGA, but may be implemented by the software implementation. When software implementation is adopted, field bus controller 120 is mainly constituted of a processor, a main storage device, a storage, and the like, and the processor reads a system program (firmware) and the like stored in the storage, deploys the system program and the like in the main storage device, and executes the system program and the like, thereby implementing required processing. Field bus controller 120 includes a counter 121 used as the reference of the time of day at which the timing is managed with another device.

Each device also includes a counter used as the reference of the time of day at which the timing is managed with field bus controller 118 or field bus controller 120.

Counter 119, counter 121, and the counter included in each device can adopt the same configuration as counter 126 described above.

Field bus controllers 118, 120 operate as a communication master performing constant periodic communication through the field bus, sequentially monitors a difference between a counter value indicated by a counter included in each device connected to the field bus and a counter value indicated by counters 119, 121, and outputs a synchronization signal instructing correction to the device in which deviation is generated in the counter value as needed. As described above, field bus controllers 118, 120 performs synchronization management processing for giving the instruction matching the counter value indicated by the counter of the device with the counter value indicated by counters 119, 121 to the device.

Secondary storage device 108 stores a plurality of programs including a system program 149 and a user program. System program 149 includes an operating system (OS), an interpreter program 151 that implements an interpreter, and the like.

The user program includes a control program 152, a system service program 195 that implements a system service, a variable management program 160, a scheduler program 170 that implements scheduler 25 when executed, an input program 172, and an output program 174. Scheduler program 170 includes a switch program 171 that implements switching unit 26 when executed.

Control program 152 includes an IEC program 1541 which is an example of a "first program", a control application program 1542 which is an example of a "second program", a database writing program 156, and a remaining amount monitoring program 1544. When executed, database writing program 156 and remaining amount monitoring program 1544 implement processing related to a non-blocking queue (NBQ) 158 described later. NBQ 158 is provided in control device 100 in association with database processing.

System service program 195 includes a database program 190, which is an example of the "third program", a higher-order connection program 192, and a gateway program 194. Database program 190 includes a database reading program 191 that, when executed, reads data from NBQ 158 for storing the data in time series database 180.

Time series database 180 included in control device 100 of the embodiment may be implemented using a storage area provided by secondary storage device 108 and/or external storage 116. In the following description, secondary storage device 108 and external storage 116 may be simply collectively referred to as a "storage". Volatile main storage device 106 may be referred to as a "memory" in comparison with the "storage".

In addition to the storage area storing the database file, time series database 180 of the embodiment includes a buffering area or a working area where processing of processor 102 or the like for implementing various operations such as generation, writing, and reading of the database file, and various operations are implemented. The storage area included in time series database 180 can be provided in main storage device 106 or secondary storage device 108.

Although the configuration example in which the required function is provided by processor 102 executing the program has been illustrated in Fig. 3, some or all of these provided functions may be mounted using the dedicated hardware circuit (for example, the ASIC or the FPGA). Alternatively, a main part of control device 100 may be implemented using hardware (for example, an industrial personal computer based on a general-purpose personal computer) according to a general-purpose architecture. In this case, the plurality of OSs having different uses may be executed in parallel using a virtualization technology, and the required application may be executed on each OS.

In control system 1 of Figs. 2 and 3, control device 100, support device 200, and display device 300 are configured as separate bodies, but a configuration in which all or a part of these pieces of processing is integrated into a single device may be adopted.

### <D. Software configuration example of control device>

A software configuration example of control device 100 of the embodiment will be described below.

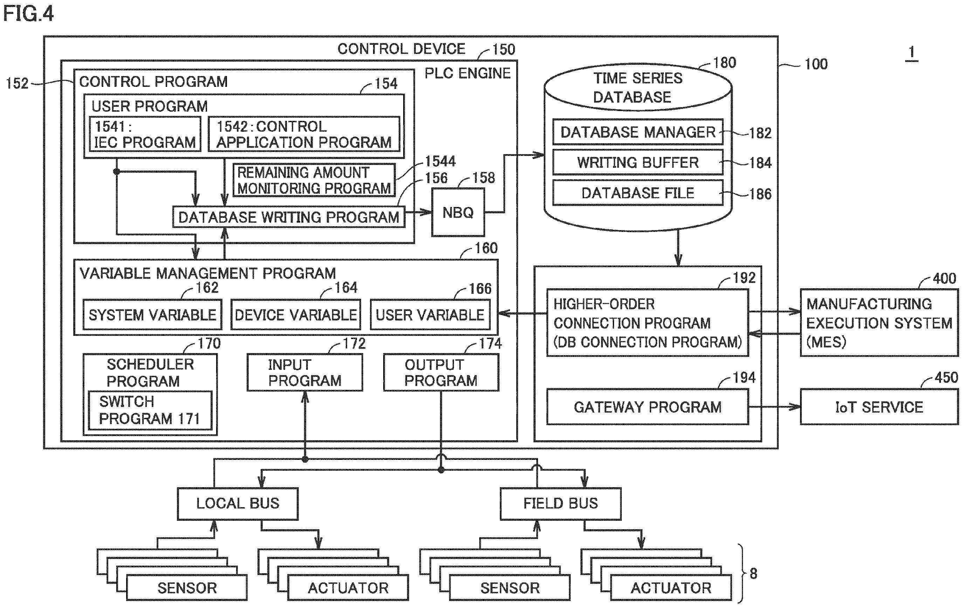

Fig. 4 is a block diagram illustrating the software configuration example of control device 100 of the embodiment. With reference to Fig. 4, control device 100 includes a PLC engine 150, time series database 180, higher-order connection program 192, and gateway program 194.

Typically, in PLC engine 150, processor 102 of control device 100 reads the system program stored in secondary storage device 108 under the OS, deploys the system program in main storage device 106, and executes the system program to provide an execution environment of various programs, and can execute various programs under the execution environment.

More specifically, PLC engine 150 is configured to selectively execute control program 152, variable management program 160, scheduler program 170, input program 172, and output program 174. NBQ 158 is implemented in PLC engine 150.

For example, NBQ 158 is implemented using a shared memory area that is prepared on the memory (volatile main storage device 106) to share access from a plurality of tasks or processes. In addition to the shared memory area on main storage device 106, NBQ 158 is implemented by buffer management processing provided by processor 102 executing the system program. The buffer management processing includes processing for defining a buffer pool including a plurality of data areas (shared buffer to be described later) divided by a predetermined size in the shared memory area and managing the state (vacant, under data storage, reservation, the like) of each shared buffer. The system program implementing the buffer management processing includes a processor instruction such as a compare and swap CAS) instruction implementing processing such as the data writing in the empty buffer.

The buffer management processing implementing NBQ 158 includes an interface that accepts the data writing from control program 152 and an interface that accepts dequeuing from a database manager 182. Each interface as described above can use NBQ 158 in a logical data transfer path from database writing program 156 to time series database 180.

Variable management program 160, scheduler program 170, input program 172, and output program 174 may be implemented as a part of the system program. In this case, each processing provided by these programs may be provided by a single system program.

Control program 152 includes IEC program 1541, control application program 1542, database writing program 156, and remaining amount monitoring program 1544. Remaining amount monitoring program 1544 monitors the remaining memory amount indicating the size of the free area of NBQ 158 and outputs a monitoring result. The data stored in NBQ 158 is read and stored in time series database 180, so that the storage area in which the read data has been stored constitutes the free area until the data is written thereafter.

Database writing program 156 corresponds to a code that provides at least a part of the data generation processing of control device 100, is called every predetermined period (for example, every control cycle) by, for example, a command described in IEC program 1541, and generates the data constituting the record to be stored in time series database 180. More specifically, NBQ 158 is disposed in a data transfer path from database writing program 156 to time series database 180, and database writing program 156 writes the designated data in NBQ 158 instead of directly writing the designated data in time series database 180.

NBQ 158 is a type of buffer for continuing the processing of database writing program 156 without waiting for completion of data writing to time series database 180. In NBQ 158, the data from database writing program 156 is stored in the form of a queue. NBQ 158 sequentially stores the data generated by database writing program 156. The data (queue) stored in NBQ 158 is sequentially read and stored in time series database 180.

A serialization communication program may be combined with database writing program 156. The serialization communication program performs serialization processing on the data written from database writing program 156 to time series database 180. More specifically, the serialization communication program is executed by PLC engine 150, and executes processing (serialization) for converting the time series data into a byte sequence that can be stored. The target data is converted into a predetermined byte sequence by serialization processing before stored in time series database 180.

At least a part of time series database 180 is configured using a storage (secondary storage device 108 or external storage 116). Time series database 180 includes database manager 182 and a writing buffer 184 in addition to database file 186 in which the data from database writing program 156 is stored in time series.

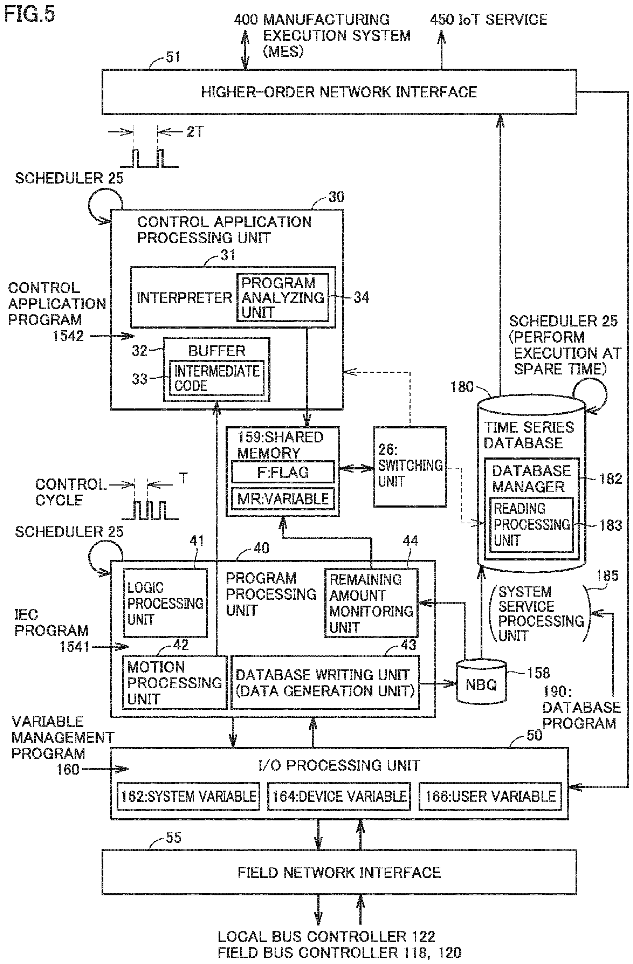

Typically, processor 102 of control device 100 executes database program 190 to implement database manager 182. Database manager 182 is responsible for adding the record to database file 186 and searching and extracting the record constituting database file 186 corresponding to an external request. When database reading program 191 is called by database program 190 and executed, a reading processing unit 183 (see Fig. 5) is implemented. Reading processing unit 183 sequentially reads the data stored in NBQ 158 and adds the data to database file 186.

For example, writing buffer 184 is implemented using the storage area prepared on main storage device 106 or the storage area prepared on a cache memory built in the storage.

Database writing program 156 generates the record of time series data from the data read from NBQ 158 by reading processing unit 183, and sequentially stores the generated record of the time series data in database file 186. In database file 186, at least a part of input data, output data, arithmetic data calculated in the control arithmetic operation by control program 152, manufacturing data, and event data is stored in time series.

Variable management program 160 manages values available in PLC engine 150 such as the input data and the output data in the form of the variable. More specifically, variable management program 160 manages a system variable 162 indicating a state or the like of control device 100, a device variable 164 indicating values held by various devices connected to control device 100 through a local bus or a field bus, and a user variable 166 indicating a value held by IEC program 1541 executed by control device 100.

Scheduler program 170 including switch program 171 manages resource allocation, execution timing, and the like with respect to a process, a task, and the like corresponding to an execution unit of the program executed by control device 100.

Input program 172 performs processing for acquiring the input data from various devices connected to control device 100 through the local bus or the field bus.

Output program 174 outputs a command value (output data) calculated by IEC program 1541 executed in control device 100 and control application program 1542 to the target device connected through the local bus or the field bus.

A statistical recording program executed by PLC engine 150 may be further included, the statistical recording program performing writing on time series database 180 after statistically processing the input data, the output data, the arithmetic data, the manufacturing data, the event data, and the like managed by control device 100. For example, a technique such as picewise aggregate approximation (PAA) or symbolic aggregate approximation (SAX) can be used as the statistical processing. The PAA can find a pattern from the time series data, and the found pattern facilitate compression. Alternatively, the SAX can facilitate the compression and the found of the pattern by converting the time series data into a character string.

Higher-order connection program 192 of control device 100 acquires manufacturing data from manufacturing execution system 400. Variable management program 160 manages the acquired input data and manufacturing data as the variable.

IEC program 1541 executes the previously-designated control arithmetic operation while referring to system variable 162, device variable 164, and user variable 166 that are managed by variable management program 160, and outputs the execution result (output data) to variable management program 160.

Database writing program 156 writes a designated observation value in the variables managed by variable management program 160 into NBQ 158. Database manager 182 of time series database 180 sequentially reads the data stored in NBQ 158 in the form of the queue, and sequentially adds the record including the read data to database file 186.

Higher-order connection program 192 outputs the value of the designated variable in the variables managed by variable management program 160 and/or the designated record in the records constituting database file 186 of time series database 180 to manufacturing execution system 400 as the time series data.

When manufacturing execution system 400 includes the database or the database is disposed separately from manufacturing execution system 400, a database connection program may be provided instead of higher-order connection program 192 or as a part of higher-order connection program 192. For example, such the database connection program may execute processing for transmitting a query such as SQL to the relational database and receiving a response.

Gateway program 194 outputs the value of the designated variable in variables managed by variable management program 160 and/or the designated record in records constituting database file 186 of time series database 180 to IoT service 450 as the time series data. IoT service 450 performs behavior analysis based on the time series data from control device 100, and performs foreseeing maintenance and the like of the facility, the devices, and the like of the control target.

### <E. Functional configuration example of control device>

Fig. 5 is a schematic diagram illustrating a functional configuration example of control device 100 of the embodiment. With reference to Fig. 5, control device 100 includes a control application processing unit 30, a program processing unit 40, an I/O processing unit 50, a scheduler 25, a switching unit 26, a field network interface 55, a higher-order network interface 51, and a system service processing unit 185. Control device 100 in Fig. 5 further includes NBQ 158 and time series database 180 in association with these components.

Scheduler 25 implements control application processing unit 30, program processing unit 40, I/O processing unit 50, and system service processing unit 185 in the order based on the priority of the execution of the programs corresponding to these units. The order of the implementation based on the priority will be described later.

Control application processing unit 30 executes control application program 1542 at a period synchronized with control cycle T according to the scheduling of scheduler 25. For example, control application program 1542 is executed every two control cycles T, namely, every 2T. The execution period of control application program 1542 is not limited to 2T.

Control application processing unit 30 includes a program analyzing unit 34 and a buffer 32 that stores an intermediate code 33. Program analyzing unit 34 analyzes the instruction code described in control application program 1542 using an interpreter 31. Control application program 1542 is executed to generate intermediate code 33 and stores the generated intermediate code in buffer 32. A part of the memory of control device 100 constitutes buffer 32. When detecting that a predetermined type of instruction code is executed during the execution of control application program 1542, program analyzing unit 34 stores the detection result as a flag F in a shared memory 159. A part of the memory of control device 100 constitutes shared memory 159.

Interpreter 31 of control application processing unit 30 interprets at least a part of control application program 1542 to generate intermediate code 33. That is, interpreter 31 sequentially interprets and executes control application program 1542 to generate intermediate code 33, and stores generated intermediate code 33 in buffer 32.

Program processing unit 40 executes IEC program 1541 for each control cycle T according to the scheduling of scheduler 25.

Program processing unit 40 executes (scans) IEC program 1541 every predetermined control cycle T to operate one or a plurality of command values. That is, program processing unit 40 operates the command value for each control cycle T according to IEC program 1541.

Program processing unit 40 includes a logic processing unit 41 that processes a logic instruction such as a sequence program included in IEC program 1541, a motion processing unit 42 that processes a motion instruction included in IEC program 1541, a database writing unit 43, and a remaining amount monitoring unit 44.

Motion processing unit 42 provides a function of operating the command value for each control cycle T according to a motion instruction included in IEC program 1541. Specifically, motion processing unit 42 operates the command value for each control cycle T according to intermediate code 33 generated previously by interpreter 31. That is, motion processing unit 42 provides a function of operating the command value for each control cycle T according to intermediate code 33 stored previously in buffer 32. In general, because the command (code) described in control application program 1542 is sequentially executed, a command value calculation period cannot be guaranteed. However, using intermediate code 33, motion processing unit 42 can operate the command value for each control cycle T. A coordinate system corresponding to each control application may be used for the instruction described in intermediate code 33.

In this manner, interpreter 31 sequentially queues generated intermediate code 33 in buffer 32, and motion processing unit 42 reads intermediate code 33 in the order of being queued in buffer 32.

In the embodiment, the "intermediate code" is a concept including the instruction operating the command value for each control cycle T. The "intermediate code" includes one or a plurality of instructions or one or a plurality of functions. In the embodiment, intermediate code 33 may be any code as long as motion processing unit 42 can operate the command value for each control cycle T.

Database writing unit 43 executes database writing program 156 called during the execution of IEC program 1541. Remaining amount monitoring unit 44 executes remaining amount monitoring program 1544 called during the execution of IEC program 1541. Database writing unit 43 that executes database writing program 156 for each control cycle T corresponds to the "data generation unit" that generates the data constituting the record to be stored in time series database 180 for each control cycle T. Specifically, database writing unit 43 stores the generated data in the free area of NBQ 158.

In addition, remaining amount monitoring unit 44 monitors the remaining memory amount corresponding to the size of the free area of NBQ 158, compares the remaining memory amount with a threshold, and sets the value indicating a comparison result to a variable MR of shared memory 159.

System service processing unit 185 executes database program 190 in the spare time of processor 102 in control cycle T according to the scheduling of scheduler 25. System service processing unit 185 includes database manager 182 including reading processing unit 183. Reading processing unit 183 is implemented by calling and executing database reading program 191 during the execution of database program 190.

Reading processing unit 183 implements processing for reading the data from NBQ 158 and storing the data in time series database 180.

Higher-order network interface 51 mediates the data exchange between program processing unit 40 and control application processing unit 30 and the apparatus connected through higher-order network 6.

Field network interface 55 is an interface between I/O processing unit 50 and the field.

I/O processing unit 50 executes variable management program 160. I/O processing unit 50 performs I/O refresh processing for updating the input data and the output data prior to the execution of IEC program 1541 by program processing unit 40. In the I/O refresh processing, the value input from the field through field network interface 55 is set to system variable 162, device variable 164, and user variable 166. Logic processing unit 41 and motion processing unit 42 perform the operation using the input data set to system variable 162, device variable 164, and user variable 166. In the I/O refresh processing of next control cycle T, one or the plurality of command values (basically, a logical value) operated by logic processing unit 41 in immediately preceding control cycle T and one or the plurality of command values (basically, a numerical value) operated by motion processing unit 42 are set to system variable 162, device variable 164, and user variable 166, and the set command values are output to the field through field network interface 55.

### (e1. Avoidance of memory exhaustion)

In the embodiment, for example, because NBQ 158 is prepared on the memory (volatile main storage device 106), the memory capacity (size) of NBQ 158 is limited. Accordingly, in the case where a use right of the resource including processor 102 is not given to system service processing unit 185 because of no spare time of processor 102, namely, in the case where system service processing unit 185 cannot execute database program 190, the free space of NBQ 158, namely, the remaining memory amount becomes insufficient. That is, the data is sequentially written in NBQ 158 by database writing unit 43, but the data is not read from NBQ 158 by reading processing unit 183, so that the free space where the data is written in NBQ 158 becomes insufficient. Hereinafter, such the insufficiency of the free space of NBQ 158 is referred to as "memory exhaustion".

In the embodiment, control device 100 is configured to secure the spare time of processor 102 during which system service processing unit 185 can execute database program 190. Thus, the memory exhaustion can be coped with.

More specifically, when switching unit 26 of scheduler 25 detects that a predetermined type of instruction code in control application program 1542 is executed based on the value of flag F, switching unit 26 of scheduler 25 causes processor 102 to interrupt the execution of control application program 1542 to secure the spare time of processor 102, and causes processor 102 to start the execution of database program 190 (more specifically, database reading program 191) in the secured spare time.

When switching unit 26 of scheduler 25 detects the possibility of the memory exhaustion based on the value of variable MR, switching unit 26 of scheduler 25 causes processor 102 to interrupt the execution of control application program 1542 to secure the spare time of processor 102, and causes processor 102 to start the execution of database program 190 (more specifically, database reading program 191) in the secured spare time.

As described above, switching unit 26 is configured to switch the program executed by processor 102 from control application program 1542 to database program 190 based on the value of flag F or variable MR during the execution of control application program 1542 in control cycle T. Thus, in control cycle T, the spare time for executing database reading program 191 can be secured, and the memory exhaustion of NBQ 158 can be avoided.

### <F. Data writing processing to time series database>

Data writing processing to time series database 180 of the embodiment will be described below.

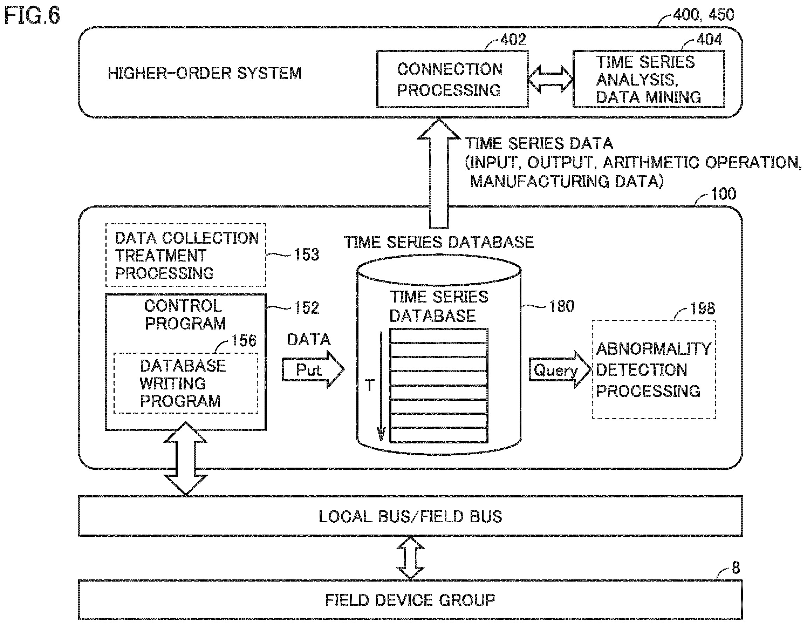

Fig. 6 is a schematic diagram illustrating a main part of the processing related to time series database 180 in control device 100 of the embodiment. With reference to Fig. 6, control device 100 exchanges the input data and the output data with field device group 8 through a local bus, a field bus, or the like.

In control device 100, control program 152 including various arithmetic operations controlling the manufacturing device and facility is cyclically executed in control cycle T. Control program 152 includes a command starting database writing program 156 when a data writing condition is satisfied.

Database writing program 156 issues an instruction for writing designated data (one or a plurality of variable values) in time series database 180. For example, a "put" instruction is illustrated in Fig. 5. Data collection treatment processing 153, which is a processing for collecting and processing the data written from database writing program 156 to time series database 180, may be executed in control program 152 or in parallel with control program 152.

In time series database 180, the data from database writing program 156 is stored in time series (time series data). The time series data stored in time series database 180 may be transmitted to a higher-order system and used for analysis processing and the like.

In the configuration of Fig. 6, the required time series data is extracted from time series database 180 using connection processing 402 disposed in the higher-order system such as manufacturing execution system 400 and IoT service 450. In the higher-order system, analysis processing 404 such as time series analysis or data mining is performed on the extracted time series data.

Alternatively, the time series data stored in time series database 180 may be used in abnormality detection processing 198. Abnormality detection processing 198 is implemented by PLC engine 150 executing the required program. Abnormality detection processing 198 compares the time series data from time series database 180 with previously-acquired teacher data, and determines that some abnormality is generated in the control target or a sign of the generation of the abnormality is observed.

In control device 100, control program 152 is cyclically executed in control cycle T (for example, several hundred microseconds to several milliseconds). Data writing to time series database 180 may be executed in synchronization with the cyclic execution of control program 152. On the other hand, time series database 180 is basically configured using the storage (secondary storage device 108 or external storage 116 (see Fig. 3)). Such the storage generally has a large storage capacity, but has a low access speed (in particular, the writing speed) and a large fluctuation of an access speed (for example, 100 milliseconds to 1000 milliseconds) as compared with the main storage device.

Therefore, control device 100 of the embodiment provides a configuration capable of implementing the data writing in synchronization with control cycle T even for time series database 180 using the storage having the low access speed.

Specifically, NBQ 158 (see Fig. 4), which is a lock-free queue, is disposed in the data writing process from control program 152 (database writing program 156) to time series database 180. By adopting such NBQ 158, even in the case where the period at which database writing program 156 issues the data writing command is shorter than the access speed to the storage, the situation in which the execution of database writing program 156 is interrupted while waiting for the data writing can be avoided. That is, the data writing to time series database 180 synchronized with control cycle T can be implemented.

When the time series data synchronized with control cycle T is stored, the input data (for example, a measurement value of an analog sensor), the output data (for example, a position instruction, and a speed instruction), the operation data (for example, a filter parameter, a feature amounts, and the like used for abnormality detection processing), and the manufacturing data (for example, a manufacturing state and a product number) can be stored in the nonvolatile storage for each control cycle T using the instruction included in control program 152.

### <G. Data structure>

An example of the data structure of the record stored in time series database 180 of the embodiment will be described.

Control device 100 may generate the record including the observation value related to the control target, the time of day associated with the observation value indicated by the time of day management processing, and/or the counter value associated with the observation value indicated by the internal counter. The observation value is a value available by processor 102.

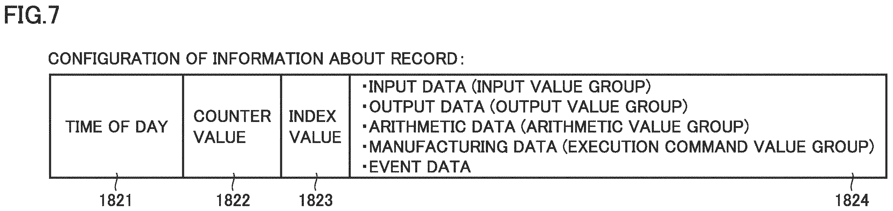

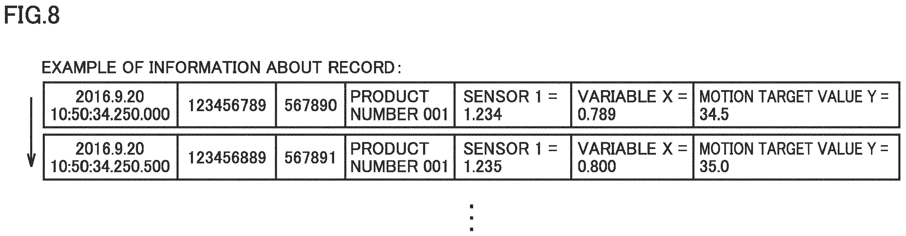

Figs. 7 and 8 are views illustrating an example of the data structure of the record stored in time series database 180 in control device 100 of the embodiment. With reference to Fig. 7, the record includes a time of day field 1821, a counter value field 1822, an index field 1823, and an observation value field 1824.

Time of day field 1821 and counter value field 1822 store information indicating the timing at which corresponding data (one or a plurality of observation values) is acquired.

More specifically, time of day field 1821 stores the time of day (for example, the time of day managed by RTC 128) indicating the timing at which the corresponding data is acquired.

Counter value field 1822 stores at least one of the counter value from the counter managed by control device 100 when the corresponding data is acquired or the counter value from the counter managing the timing in the field bus/local bus. The time of day is stored in time of day field 1821 and the counter value is stored in the counter value field 1822, so that post-analysis of the corresponding data (observation value) can be supported.

Index field 1823 stores a value (index value) incremented/decremented by a predetermined value according to a recording writing operation to the database. Typically, the value that is counted up by one each time the record is stored is used. For example, when the instruction starting database writing program 156 is described in IEC program 1541, the index value may be incremented with the execution of the starting instruction.

In observation value field 1824, designated data (one or a plurality of observation values) is stored. The data stored in observation value field 1824 includes the input data, the output data, the operation data, the manufacturing data, and the event data.

Specifically, the input data includes the digital signal (state value) and the analog signal (various measurement signal) acquired from various sensors. Information specifying the sensor that outputs the observation value may be stored together in addition to the observation value.

The command value output to a motion drive, an opening adjuster, or the like may be stored as the output data. Information specifying an actuator of an output destination of the command value may be stored together in addition to the command value.

A variable value, a transient value, or the like calculated by the execution of IEC program 1541 may be stored as the operation data. Information specifying IEC program 1541, the task, or the like that outputs the operation data may be stored together in addition to the variable value and the transient value.

An execution command value group (for example, a product number, a lot number, a recipe number, and the like of a workpiece) received from manufacturing execution system 400 may be stored as the manufacturing data. The execution command value group may include information specifying an identification number uniquely specifying the workpiece, a type of the workpiece, and the like.

Information in the case where the observation value exceeds or falls below a predetermined threshold or information in the case where a predetermined abnormality flag or the like is turned on may be stored as the event data. Information such as the variable generating the event data may be included.

Furthermore, the event data may be generated when a predetermined condition is satisfied instead of time series data repeatedly generated or stored at a predetermined cycle. Also in this case, the counter value and/or the time of day synchronized with the counter may be associated with each other.

The record as described above is generated and output for each control cycle T or each predetermined event. For example, the example in Fig. 8 illustrates an example in which the record is generated and output every 500 µsec. In this manner, by generating and outputting the record including the designated observation value in time series, various analyses can be performed based on these pieces of time series data.

The record in Fig. 7 or 8 may be configured as a Key-Value type. In this case, for example, time of day field 1821 and counter value field 1822 may be set as Key, and index field 1823 and observation value field 1824 may be set as Value. That is, each record of the time series data includes the time of day and the counter value associated with the observation value as Key, and includes the observation value as corresponding Value.

In the above description, the processing in which control device 100 stores the record in time series database 180 included in control device 100 has been described as a typical example. However, the present invention is not limited thereto, but the record may be transmitted to a higher-order system or the like. Also in this case, the record in Fig. 7 or Fig. 8 may be generated for each control cycle T and transmitted to a target external device by system service processing unit 185.

Furthermore, database manager 182 and database file 186 constituting time series database 180 of control device 100 may not be disposed in the same control device 100. That is, in control device 100, database manager 182 of system service processing unit 185 may read the data from NBQ 158 and write the record in database file 186 outside control device 100. A storage of another control device 100, a storage on a network (network storage), or the like is assumed as the outside of control device 100.

NBQ 158 disposed in the logical data transfer path from database writing program 156 to time series database 180, which is implemented in control device 100 of the embodiment, has an effect of compensating for the delay of the writing speed to the storage, but can also have an effect of compensating for the delay of the writing speed to the network storage.

When such the configuration in which the record can be written on the network storage is adopted, more data can be stored as compared with a configuration in which the record is stored as database file 186 in control device 100. Furthermore, a configuration in which each of a plurality of control devices 100 writes the record to a single network storage is also possible, and the storage can be aggregated, which also provides advantages in terms of data management and security.

### <H. Period control and switch>

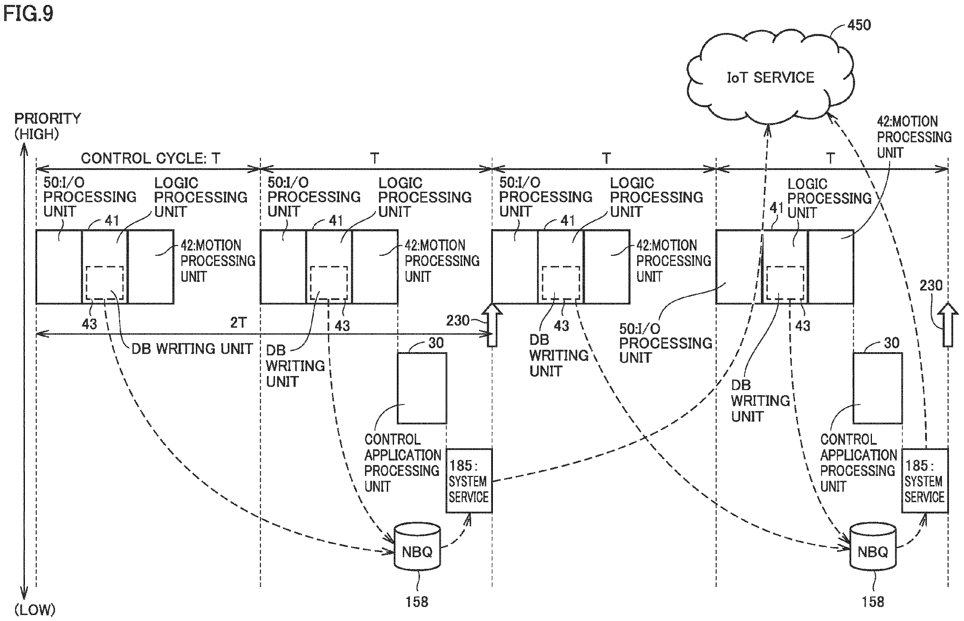

Figs. 9 to 12 are schematic diagrams illustrating an example of period control in control device 100 of the embodiment. With reference to Figs. 9 to 12, the period control and securing of the spare time for system service processing unit 185 will be described.

Fig. 9 illustrates an example in which I/O processing unit 50, logic processing unit 41 including database writing unit 43 (in the drawing, abbreviated as DB writing unit 43), motion processing unit 42, control application processing unit 30, and system service processing unit 185 are sequentially executed. These processing units are treated as "tasks" in control device 100. The task is a basic unit that becomes the control target allocating a resource (computing resource) including processor 102 of control device 100, and one or a plurality of programs to be executed are registered or set in each task. That is, when the resource is allocated to any task and the task becomes the executable state, the execution of one or the plurality of programs registered or set in the task is started or resumed. In the embodiment, for example, the task includes a primary task, a secondary task, and a system service task.

The primary task includes a program having the highest priority (hereinafter, also simply referred to as "priority") of execution executed by processor 102 of control device 100. The primary task includes I/O processing unit 50, logic processing unit 41, and motion processing unit 42. It is guaranteed that the primary task is executed in each control cycle T.

The secondary task is a task having a lower priority than the primary task and having a guaranteed execution period. For example, the secondary task includes control application processing unit 30. For example, control application processing unit 30 of the secondary task is executed at the period that is an integral multiple of control cycle T. In the embodiment, for example, control application processing unit 30 is executed every cycle 2T, namely, every twice control cycle T.

Interpreter 31 of control application processing unit 30 that is executed with the low priority temporarily stops the interpretation of control application program 1542 before a predetermined control application synchronization period (cycle 2T) arrives. The pausing timing includes timing at which all the codes of control application program 1542 are interpreted and executed.

The data having consistency between program processing unit 40 and control application processing unit 30 is shared by performing data synchronization 230 between program processing unit 40 and control application processing unit 30 at the timing of the temporary stop of program processing unit 40 and control application processing unit 30. As described above, interpreter 31 updates the data shared with program processing unit 40 every cycle 2T that is a synchronization period (that is, the control application synchronization period) that is an integral multiple of control cycle T. In addition to the update of the shared data, the input data and the output data acquired from the field side may also be updated (data synchronization).

The system service task has the lower priority than the secondary task, and is executed in the spare time of processor 102 in control cycle T. The system service task includes system service processing unit 185. Thus, control device 100 can execute the system service task within a range in which the execution periods of the primary task and the secondary task are guaranteed.

Scheduler 25 implements the period control of the task by managing execution timing of (each program included in) these tasks according to the priority. More specifically, scheduler 25 causes processor 102 to execute the program of each task according to the priority by allocating the resource to the program of each task at appropriate timing and period.

In the case of Fig. 9, in each control cycle T, database writing unit 43 called by logic processing unit 41 is executed to write the data in NBQ 158, and reading processing unit 183 of system service processing unit 185 reads the data from NBQ 158 every cycle 2T. As a result, the memory exhaustion can be avoided.

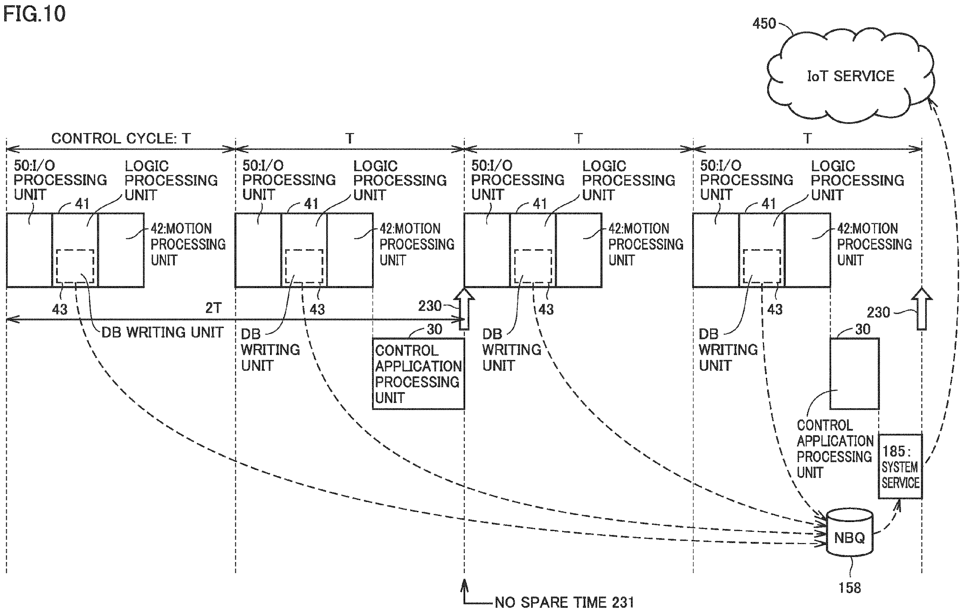

On the other hand, the execution time of control application processing unit 30 becomes long depending on a content of control application program 1542. When the execution time of control application processing unit 30 becomes long, sometimes the above-described pause timing coincided with the end of cycle 2T. In this case, as illustrated in Fig. 10, an event of no spare time 231 is generated within control cycle T. In Fig. 10, because the event of no spare time 231 is generated in immediately preceding cycle 2T, the data is stored in NBQ 158 by database writing unit 43 even though the data is not read from NBQ 158 by reading processing unit 183 until the spare time in subsequent cycle 2T. Therefore, NBQ 158 stores the data over N (N ≥ 4) control cycles T up to the spare time in the subsequent cycle 2T, so that there is a possibility that the memory is exhausted before the spare time in the subsequent cycle 2T arrives.

### (h1. Example of task switch)

In the embodiment, in order to secure the execution time of system service processing unit 185 in control cycle T, namely, in order to avoid the memory exhaustion, control device 100 switches the task when detecting that a predetermined type of instruction code of control application program 1542 is executed.

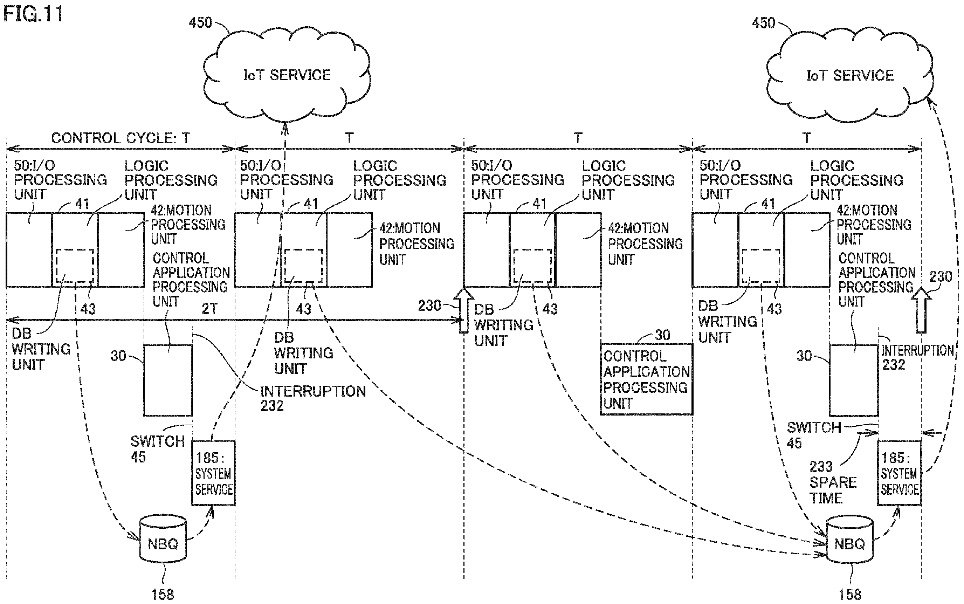

Specifically, with reference to Fig. 11, program analyzing unit 34 called and executed during the execution of control application processing unit 30 detects whether interpreter 31 executes a predetermined type of instruction code of control application program 1542. When detecting that the predetermined type of instruction code is executed, program analyzing unit 34 sets flag F to true. When detecting that flag F is changed from False to True, switching unit 26 of scheduler 25 switches the task (switch 45). Specifically, switching unit 26 causes processor 102 to interrupt (interruption 232) the execution of control application processing unit 30 and start the execution of system service processing unit 185. The processing in which program analyzing unit 34 detects that the predetermined type of instruction code is executed will be described later.

According to the task switch in Fig. 11, control device 100 secures a spare time 233 by interruption 232 of the execution of control application processing unit 30 in control cycle T, and reading processing unit 183 of system service processing unit 185 reads the data from NBQ 158 in secured spare time 233. This can avoid the memory exhaustion of NBQ 158.

### (h2. Another example of task switch)

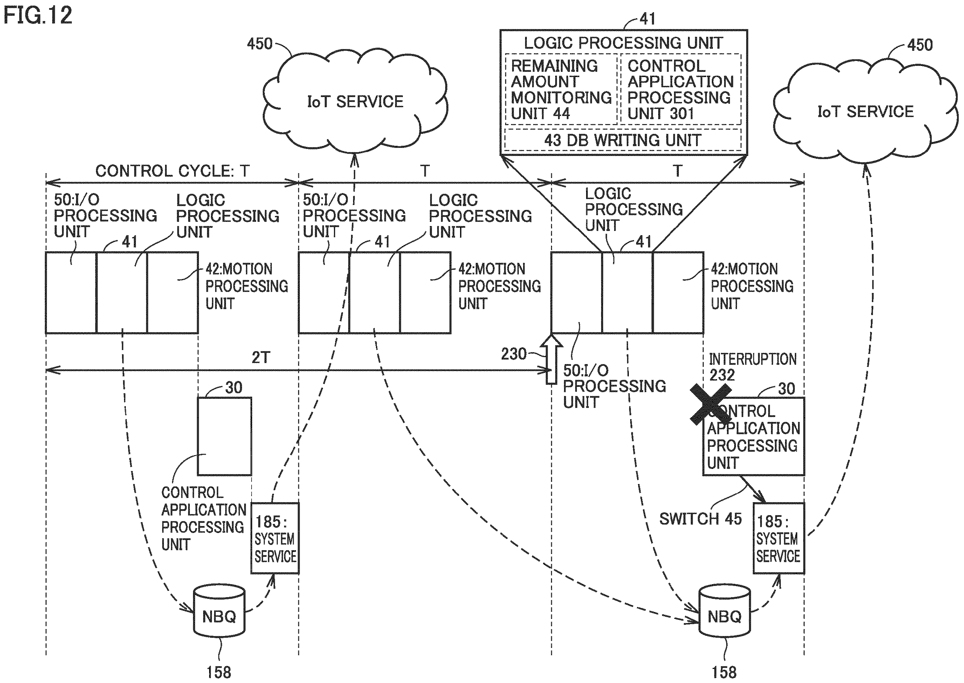

In the embodiment, in order to avoid the memory exhaustion, control device 100 performs task switching as illustrated in Fig. 12 based on the value of variable MR indicating the memory remaining amount of NBQ 158 detected by remaining amount monitoring unit 44.

With reference to Fig. 12, the primary task includes I/O processing unit 50, logic processing unit 41, and motion processing unit 42. Logic processing unit 41 includes a remaining amount monitoring unit 44 and control application processing unit 301 in addition to DB writing unit 43. Remaining amount monitoring unit 44 is implemented by executing remaining amount monitoring program 1544 called during the execution of IEC program 1541. Control application processing unit 301 is implemented by executing a predetermined instruction code described in IEC program 1541. The predetermined instruction code implementing control application processing unit 301 will be described later. Remaining amount monitoring program 1544 may also be configured to include a remaining amount monitoring instruction code described in IEC program 1541.

Remaining amount monitoring unit 44 detects the remaining memory amount (for example, the unit is percent) of NBQ 158, compares the detected remaining memory amount with the threshold, and sets the value based on the comparison result to variable MR.

In the embodiment, the threshold includes a warning threshold and a monitoring threshold indicating the value larger than the warning threshold. In the case where the above comparison result indicates (remaining memory amount > monitoring threshold), remaining amount monitoring unit 44 sets "Normal" in variable MR so as to indicate that a sufficient margin exist in the memory remaining amount. In the case where the comparison result indicates (monitoring threshold ≥ remaining memory amount > warning threshold), remaining amount monitoring unit 44 sets "Monitoring" in variable MR so as to indicate that there is a possibility of the memory exhaustion. In the case where the comparison result indicates (remaining memory amount ≤ warning threshold), remaining amount monitoring unit 44 sets "Warning" in variable MR so as to indicate that the memory exhaustion has been reached.

For example, switching unit 26 does not execute switch 45 of the task when variable MR indicates "Normal" or "Monitoring" in control cycle T, but executes switch 45 when variable MR indicates "Warning". Specifically, switching unit 26 causes processor 102 to interruption 232 the execution of currently-executed control application processing unit 30 in control cycle T, implement switch 45, and start the execution of system service processing unit 185. Thus, control device 100 can execute system service processing unit 185 in spare time 233 generated by interruption 232 in control cycle T and read the data from NBQ 158. Consequently, control device 100 can eliminate the memory exhaustion of NBQ 158.

Remaining amount monitoring unit 44 typically detects the remaining memory amount of NBQ 158 at the start of the execution of IEC program 1541 in control cycle T. Thus, in each control cycle T, variable MR is set to the value based on the latest remaining memory amount. Accordingly, switching unit 26 can determine whether to execute switch 45 based on the most recently detected remaining memory amount.

### <I. Specific example of task switch>

Specific implementation examples of each of the above (h1. example of task switch) and (h2. another example of task switch) will be described.

### (i1. Specific example of task switch)

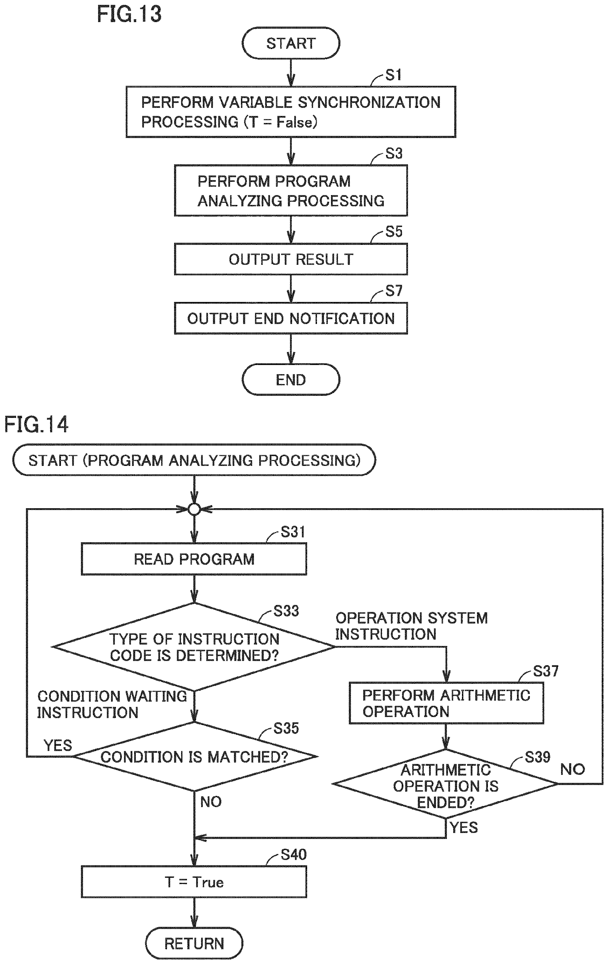

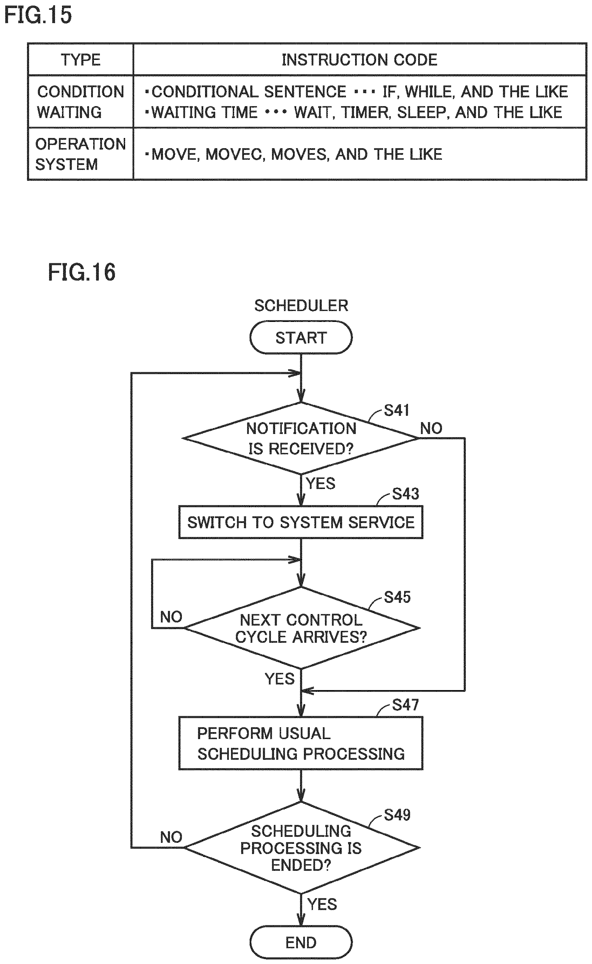

With reference to Figs. 13 to 16, specific processing of the above (h1. example of task switch) will be described. Fig. 13 is a flowchart schematically illustrating processing of control application processing unit 30 of the embodiment. Fig. 14 is a flowchart illustrating processing of program analyzing unit 34 of the embodiment. Fig. 15 is a table illustrating a correspondence between the type of the instruction code and the program code of the embodiment. Fig. 16 is a flowchart schematically illustrating processing of scheduler 25 of the embodiment.

With reference to Fig. 13, control application processing unit 30 performs variable synchronization processing (step S1). The variable synchronization processing is included in the processing of data synchronization 230 described above. In step S1, control application processing unit 30 sets flag F to false as an initial value.

When the processing of control application processing unit 30 is started, program analyzing unit 34 of interpreter 31 performs program analysis of control application program 1542 (step S3). With reference to Fig. 14, details of the program analyzing processing will be described.

Control application processing unit 30 outputs the execution result of control application program 1542 (step S5). For example, control application processing unit 30 stores intermediate code 33 in buffer 32 as the execution result.

When ending the execution of control application program 1542, control application processing unit 30 outputs an end notification (step S7).

The processing of program analyzing unit 34 in Fig. 14 is performed with reference to the table in Fig. 15. For example, the table in Fig. 15 is stored in a storage. With reference to Fig. 15, the table includes a predetermined instruction code type (condition waiting, operation system) and an instruction code corresponding to the type in association with the type.

In Fig. 15, the condition waiting instruction code includes a waiting condition and a waiting instruction code described using a code determining whether the waiting condition is satisfied. Specifically, the condition waiting instruction code is an instruction code that instructs not to execute the instruction code of the program of the next line until the waiting condition is matched, namely, until it is determined that the waiting condition is satisfied. For example, this instruction code includes the instruction code such as an IF statement or a WHILE statement described using the waiting condition, and the instruction code such as WAIT, TIMER, or SLEEP described using elapse of a predetermined time as the waiting condition.

For example, the condition waiting instruction code includes the instruction code that defines an input waiting state of a signal of a digital input, timer processing, an in-position check waiting state, and the like on control application program 1542.

In addition, an operation system instruction code is the instruction code that generates intermediate code 33 when executed, and for example, includes MOVE, MOVEC, MOVES, and the like that are the instruction code related to trajectory generation.

Intermediate code 33 generated by the execution of the operation system instruction code enables the arithmetic operation of the command value over a plurality of control cycles T. For example, assuming that intermediate code 33 output by the execution of a certain operation system instruction code defines the command value over a term of a plurality of consecutive control cycles T, motion processing unit 42 reads intermediate code 33 from buffer 32 and periodically operates the command value over the term of the plurality of control cycles T. The number of consecutive control cycles T defined by the command value that can be generated from one intermediate code 33 can be changed for each instruction code of the operation system instruction code.

Therefore, when the processing for generating intermediate code 33 from control application program 1542 of control application processing unit 30 is executed sufficiently prior to the arithmetic processing of the command value by motion processing unit 42 of program processing unit 40, even when the execution of control application processing unit 30 is interrupted by switch 45 of the task, motion processing unit 42 can calculate the command value in the term over the subsequent plurality of consecutive control cycles T using intermediate code 33 of buffer 32.

With reference to Fig. 14, interpreter 31 reads the program line by line from the head line of control application program 1542 (step S31), and program analyzing unit 34 determines the type of the instruction code of the read program by referring to the table in Fig. 15 (step S33).

When program analyzing unit 34 analyzes the instruction code to determine that the instruction code is the operation system instruction code based on the analysis result ("operation system instruction" in step S33), program analyzing unit 34 performs the arithmetic operation according to the instruction code and calculates intermediate code 33 that is the arithmetic result (step S37).

Program analyzing unit 34 determines whether the operation is completed (step S39). When determining that the operation is not completed (NO in step S39), program analyzing unit 34 proceeds the processing to step S31, and interpreter 31 reads the program of the next line. When determining that the operation is completed (YES in step S39), program analyzing unit 34 proceeds the processing to step S40.

When program analyzing unit 34 analyzes the instruction code to determine that the instruction code is a condition waiting instruction code based on the analysis result ("condition waiting instruction" in step S33), program analyzing unit 34 performs the arithmetic operation according to the instruction code and determines whether the condition is satisfied (the condition is matched) based on the operation result (step S35). When determining that the condition is matched (YES in step S35), program analyzing unit 34 proceeds to step S31, and interpreter 31 reads the program of the next line. When program analyzing unit 34 determines that the condition is not matched (NO in step S35), namely, when program analyzing unit 34 determines that control application processing unit 30 enters the waiting state until the condition is matched, program analyzing unit 34 proceeds the processing to step S40.

In step S40, program analyzing unit 34 sets flag F to true.

With reference to Fig. 16, scheduler 25 determines whether a notification that flag F is changed from false to true is received from program analyzing unit 34 (step S41). When determining that the notification is not received (NO in step S41), scheduler 25 performs a normal scheduling processing (step S47). That is, scheduler 25 causes processor 102 to execute the tasks in the order based on the priority.

On the other hand, when scheduler 25 determines that the notification is received (YES in step S41), switching unit 26 switches the task. That is, switching unit 26 causes processor 102 to interrupt the execution of control application processing unit 30 and start the execution of system service processing unit 185 (step S43).

When the task is switched, scheduler 25 determines whether next control cycle T arrives (step S45). While determining that next control cycle T does not arrive (NO in step S45), scheduler 25 repeats the processing of step S45. When determining that next control cycle T arrives (YES in step S45), scheduler 25 performs the processing of step S47 to determine whether the scheduling processing is ended (step S49).

When determining that the task scheduling processing is not finished (NO in step S49), scheduler 25 returns the processing to step S41. However, when determining that the task scheduling processing is finished (YES in step S49), scheduler 25 finishes a series of processing.

According to the processing of scheduler 25 in Fig. 16, when flag F is changed from false to true, switching unit 26 causes processor 102 to interrupt the execution of control application processing unit 30 and start the execution of system service processing unit 185, so that the data reading from NBQ 158 is performed and the memory exhaustion can be avoided.

In addition, because buffer 32 can store intermediate code 33 that enables the calculation of the command value over the plurality of control cycles T, even when the execution of control application processing unit 30 is interrupted, the interruption does not affect the calculation of the command value of motion processing unit 42.

### (i2. Another specific example of task switch)

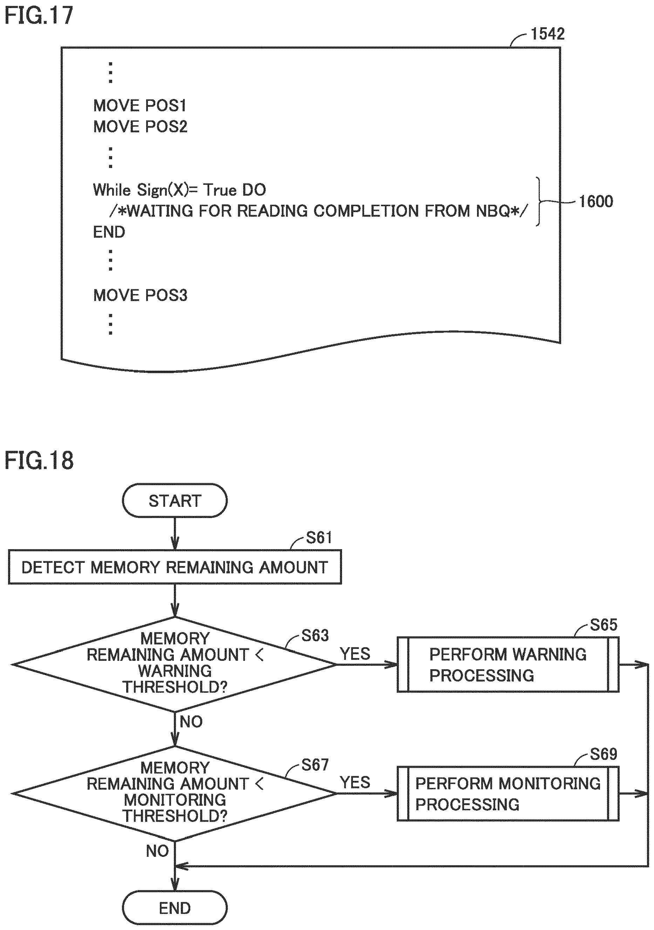

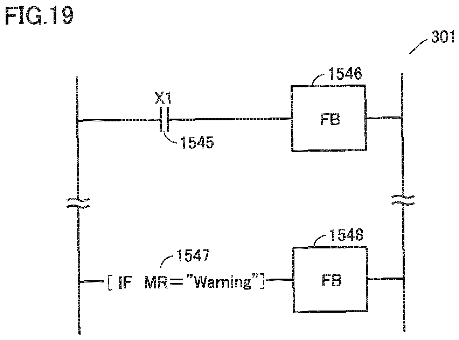

With reference to Figs. 17 and 18, specific processing of the above (h2. another example of task switch) will be described. Fig. 17 is a view schematically illustrating a part of control application program 1542 of the embodiment. Fig. 18 is a flowchart schematically illustrating processing of switching unit 26 of the embodiment. Fig. 19 is a view schematically illustrating an example of the instruction code executed by control application processing unit 301 of the embodiment.

The instruction code executed by control application processing unit 301 as illustrated in Fig. 19 includes the instruction code executed in the case where the execution of control application processing unit 30 (that is, control application program 1542) is interrupted by switch 45 in IEC program 1541. The instruction code is an instruction code performing processing related to real time control of the control target, and typically includes an instruction code corresponding to the instruction code of control application program 1542 and generating the intermediate code.

With reference to Fig. 17, control application program 1542 includes an instruction code 1600. Instruction code 1600 indicates a waiting instruction indicating that the instruction code of the next line of the program is not analyzed and executed while a condition of "Sign(X) = True" is satisfied. Sign(X) indicates a condition that "variable MR indicates "Warning"". Accordingly, while variable MR indicates "Warning", the next instruction code of control application program 1542 enters a waiting state of not being executed. This waiting state includes the waiting state until variable MR is changed to "Normal" or "Monitoring". Specifically, the waiting state includes a state of waiting until the memory exhaustion of NBQ 158 is resolved, namely, a state of waiting until the data is read from NBQ 158 by reading processing unit 183 to produce the sufficient free area.

As described above, while NBQ 158 is in the memory exhaustion state, switching unit 26 can cause processor 102 to interrupt the execution of control application processing unit 30 and start the execution of system service processing unit 185, thereby eliminating the memory exhaustion. Instruction code 1600 corresponds to the type of instruction code waiting for the condition illustrated in Fig. 15.

When variable MR is changed from "Warning" to "Normal" or "Monitoring" by the data reading of system service processing unit 185 from NBQ 158, instruction code 1600 of the waiting instruction ends the waiting. That is, when variable MR is changed from "Warning" to "Normal" or "Monitoring", the condition of "Sign(X) = True" of instruction code 1600 is not satisfied, and the instruction code of the next line of instruction code 1600 is read and analyzed and executed in control application program 1542.

With reference to Fig. 18, remaining amount monitoring unit 44 detects the remaining memory amount (step S61), compares the detected remaining memory amount with the warning threshold and the monitoring threshold (step S63, step S67), and sets the value based on the comparison result to variable MR.

Switching unit 26 performs warning processing (step S65) when the value of variable MR indicates "Warning" (YES in step S63), and performs monitoring processing (step S69) when the value of variable MR indicates "Monitoring" (NO in step S63, YES in step S67). When the value of variable MR indicates neither "Warning" nor "Monitoring" (NO in step S67), namely, when variable MR indicates "Normal", the processing is ended.

With reference to Fig. 19, an example of the warning processing (step S65) and the monitoring processing (step S69) will be described. For example, the program of control application processing unit 301 is described in IEC program 1541 as a ladder program. In Fig. 19, function blocks (FBs) 1546, 1548 correspond to some instruction codes of control application program 1542. In the monitoring processing (step S69), switching unit 26 outputs a signal X1 to program processing unit 40. In IEC program 1541 executed by program processing unit 40, when signal X1 is input, a block 1545 is turned on to execute FB 1546. In the warning processing (step S65), FB 1548 is executed when a condition block 1547 of an IF statement of "variable MR indicates "Warningʺʺ is turned on, namely, when the condition of the IF statement is satisfied.

When FB 1546 in Fig. 19 is executed, for example, FB 1546 outputs intermediate code 33 over N consecutive control cycles T. When FB 1548 executed, for example, FB 1548 outputs intermediate code 33 over M consecutive control cycles T (where M ≥ N).

As a result, in the term in which the value of the remaining memory amount is smaller than the monitoring threshold or the warning threshold, even when the execution of control application processing unit 30 is interrupted in control cycle T in order to cope with the memory exhaustion, control application processing unit 301 of the primary task is executed in the control cycle T, so that intermediate code 33 calculating the command values over the plurality of control cycles T can be calculated. Accordingly, the calculation of intermediate code required for the calculation of the command value can be ensured prior to the execution of motion processing unit 42 in the primary task of each control cycle T.

The program of control application processing unit 301 in Fig. 19 may be executed in the primary task when switch 45 is executed according to flag F.

### <J. Application examples>

An application example using the time series data generated and output by control device 100 of the embodiment will be described below.

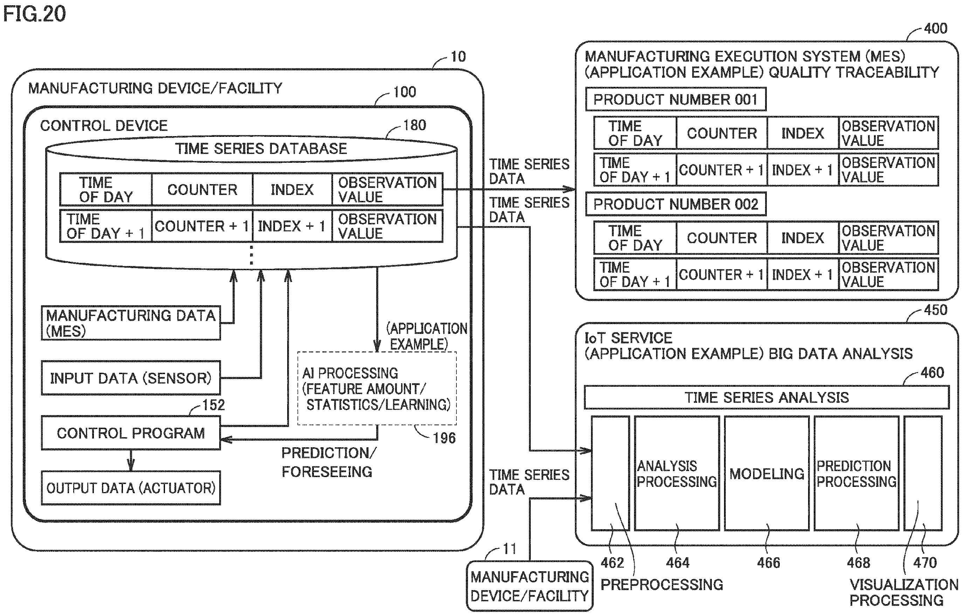

Fig. 20 is a view illustrating an application example using the time series data stored in time series database 180 of control device 100 of the embodiment.

In the example of Fig. 20, manufacturing execution system 400 implements quality traceability and the like using the time series data stored in time series database 180 of control device 100. Specifically, based on the manufacturing data included in the time series data stored in time series database 180, it is determined which workpiece (product) the time series data is associated with. The state of each workpiece at the time of the manufacturing can be grasped by arranging the discriminated time series data for each workpiece in the order of the time of day. For example, Fig. 20 illustrates an example in which a plurality of pieces of time series data are stored in association with a workpiece of "product number 001" while a plurality of pieces of time series data are stored in association with a workpiece of "product number 002".

As described above, manufacturing execution system 400 may generate the information about the quality traceability based on the time series data stored in time series database 180 of control device 100.

When the information about the quality traceability is generated, the observation value in the time series data is processed in association with the time of day and the information about the counter, thereby generating more temporally precise information.

Furthermore, in the example of Fig. 20, IoT service 450 implements what is called big data analysis. In IoT service 450, not only the time series data from control device 100 that controls a manufacturing device/facility 11 but also the time series data from another manufacturing device/facility 11 are output. In IoT service 450, various analyses are performed on the time series data from one or a plurality of manufacturing devices/facilities. A time series analysis 460 is illustrated as an example of such an analysis.

One or a plurality of processors that constitute the system providing IoT service 450 perform time series analysis 460. In time series analysis 460, one or the plurality of processors execute preprocessing 462 on the time series data. In preprocessing 462, one or a plurality of processors executes processing for extracting a feature amount and the like from the time series data stored in the storage to lower a dimension, processing for excluding an abnormal value and an outlier, and the like. Furthermore, one or the plurality of processors execute analysis processing 464 on the time series data on which preprocessing 462 is performed.

One or the plurality of processors perform modeling 466 based on the results of analysis processing 464 to generate a model for the manufacturing device/facility of the control target. One or the plurality of processors store the generated model (set of functions or parameters) in the storage. Furthermore, one or the plurality of processors execute prediction processing 468 of the generation of the abnormality, progress of degradation, and the like based on the generated model. Finally, one or the plurality of processors may visually output the result of prediction processing 468 on the display or the like using a graph, a table, or the like (visualization processing 470).

As described above, IoT service 450 performs the data analysis based on the time series data stored in time series database 180 of control device 100. Typically, it is assumed that such IoT service 450 is implemented in the environment having sufficient operation resources on a cloud. Therefore, a hidden characteristic and the like can be found using a large amount of time series data.

When such the data analysis is performed, a temporal relationship between the observation values in the time series data can be more precisely determined by associating the time of day and the information about the counter, so that more accurate and meaningful analysis can be implemented. For example, in generating a model, although a hidden causal relationship between observation values is required to be searched, such the causal relationship cannot be sometimes found due to temporal deviation. In the system of the embodiment, the temporal relationship between the observation values can be more accurately determined in the preprocessing, so that the generation of the more accurate model can be implemented.

In addition, it is useful in the case where facility data is checked at the time of day at which some abnormality is generated by referring to the time of day at which the abnormality is generated.

Furthermore, in Fig. 20, an example in which artificial intelligence (AI) processing 196 is performed inside control device 100 is illustrated. In AI processing 196, for example, supervised machine learning may be performed, and an abnormality or a degradation tendency generated in the manufacturing device or facility of the control target may be previously detected.

Specifically, AI processing 196 generates the feature amount from one or a plurality of observation values included in the time series data stored in time series database 180 of control device 100, statistically processes the generated feature amount, and holds the feature amount as learning data. Then, when some new observation value is input, AI processing 196 calculates a degree indicating how much the input observation value deviates from the learning data, and determines presence or absence of the abnormality and a degradation tendency based on the calculated degree of deviation.

The abnormality or the degradation tendency generated in the manufacturing device or facility of the control target can be substantially detected in real time by mounting such AI processing 196 in control device 100.

### <K. Appendix>

The above embodiment includes the following technical ideas.

### [Configuration 1]

A control device (100) for controlling a control target (8), the control device including:
a processor (102);
a storage (108) configured to store a plurality of programs; and
a scheduler (25) configured to manage a program executed by the processor according to a priority within a predetermined period,
wherein the plurality of programs in the storage includes
a first program (1541) for real time control processing of the control target, the first program having a highest priority of execution executed by the processor in the period,
a second program (1542) for related processing related to real time control, the second program having a lower priority of execution than that of the first program, and
a third program (190, 191) of a system service, the third program having a lower priority of execution than that of the second program and executed when a spare time of the processor exists in the period, and
the scheduler includes a switching unit (26) that causes the processor to interrupt the execution of the second program to start the execution of the third program when the execution of the second program is started and then when a predetermined type of an instruction code is executed in the second program within the period.

### [Configuration 2]

The control device described in the configuration 1, wherein
the real time control processing includes a processing for generating a command value to the control target based on an intermediate code generated by the related processing, and
the predetermined type of the instruction code includes an instruction code that generates the intermediate code over a plurality of periods when being executed.

### [Configuration 3]

The control device described in the configuration 1 or 2, wherein the predetermined type of the instruction code includes a waiting instruction code described using a waiting condition and a code determining whether the waiting condition is satisfied.

### [Configuration 4]

The control device described in any one the configurations 1 to 3, wherein the second program includes a program described in an interpreter language.

### [Configuration 5]

The control device described in any one of the configurations 1 to 4, wherein the system service includes processing of a time series database (180) that stores a record including data related to the control target in time series.

### [Configuration 6]

The control device described in the configuration 5, further including:
a data generation unit (43) configured to generate data constituting a record stored in the time series database for each period; and
a non-blocking queue (158) formed on a volatile main storage device that sequentially stores the data generated by the data generation unit,
wherein the system service includes processing (183) for reading the data from the non-blocking queue and storing the read data in the time series database.

### [Configuration 7]

The control device described in the configuration 6, further including the time series database.

### [Configuration 8]

The control device described in the configuration 6 or 7, further including a remaining amount monitoring unit (44) configured to monitor a remaining memory amount of the non-blocking queue,
wherein the switching unit causes the processor to interrupt the execution of the currently-executed second program to start the execution of the third program based on a result of comparison between the remaining memory amount and a threshold.

### [Configuration 9]

The control device described in any one of the configurations 1 to 8, wherein the first program includes an instruction code (301) of the related processing executed when the execution of the second program is interrupted.

### [Configuration 10]

A program executed by a control device (100) including a processor (102) controlling a control target (8), the program including:
a scheduler program (170) configured to manage a program executed by the processor according to a priority within a predetermined period;
a first program (1541) for real time control processing of the control target, the first program having a highest priority of execution executed by the processor in the period;
a second program (1542) for related processing related to the real time control, the second program having a lower priority of execution than that of the first program; and
a third program (190, 191) of a system service, the third program having a lower priority of execution than that of the second program and executed when a spare time of the processor exists in the period,
wherein the scheduler program includes a switch program (171) that causes the processor to interrupt the execution of the second program to start the execution of the third program when the execution of the second program is started and then when a predetermined type of an instruction code is executed in the second program within the period.

### [Configuration 11]

A control method for controlling a control device (100) including a processor (102) controlling a control target (8),
the control device including
a first program (1541) for real time control processing of the control target, the first program having a highest priority of execution executed by the processor in a predetermined period,
a second program (1542) for related processing related to the real time control, the second program having a lower priority of execution than that of the first program, and
a third program (190, 191) of a system service, the third program having a lower priority of execution than that of the second program and executed when there is a spare time of a processor in the period,
the control method including managing a program executed by the processor according to a priority within the period,
wherein the managing step includes
   within the period,
   (S33) starting the execution of the second program and then determining whether a predetermined type of an instruction code is executed in the second program, and
   (S43) causing the processor to interrupt the execution of the second program to start the execution of the third program based on the determination.

It should be considered that the disclosed embodiment is an example in all respects and not restrictive. The scope of the present invention is defined by not the above description, but the claims, and it is intended that all modifications within the meaning and scope of the claims are included in the present invention.

### REFERENCE SIGNS LIST

1: control system, 25: scheduler, 26: switching unit, 30, 301: control application processing unit, 31: interpreter, 32: buffer, 33: intermediate code, 34: program analyzing unit, 40: program processing unit, 41: logic processing unit, 42: motion processing unit, 43: database writing unit, 44: remaining amount monitoring unit, 45: switch, 50: I/O processing unit, 100: control device, 102: processor, 106: main storage device, 108: secondary storage device, 151: interpreter program, 152: control program, 156: database writing program, 159: shared memory, 160: variable management program, 170: scheduler program, 171: switch program, 172: input program, 174: output program, 180: time series database, 182: database manager, 183: reading processing unit, 184: writing buffer, 185: system service processing unit, 186: database file, 190: database program, 191: database reading program, 195: system service program, 1541: IEC program, 1542: control application program, 1544: remaining amount monitoring program, F: flag, MR: variable, T: control cycle

## Claims

1. A control device for controlling a control target, the control device comprising:
a processor;
a storage configured to store a plurality of programs; and
a scheduler configured to manage a program executed by the processor according to a priority within a predetermined period,
wherein the plurality of programs in the storage includes
a first program for real time control processing of the control target, the first program having a highest priority of execution executed by the processor in the period,
a second program for related processing related to real time control, the second program having a lower priority of execution than that of the first program, and
a third program of a system service, the third program having a lower priority of execution than that of the second program and executed when a spare time of the processor exists in the period, and
the scheduler includes a switching unit that causes the processor to interrupt the execution of the second program to start the execution of the third program when the execution of the second program is started and then when a predetermined type of an instruction code is executed in the second program within the period.

2. The control device according to claim 1, wherein
the real time control processing includes a processing for generating a command value to the control target based on an intermediate code generated by the related processing, and
the predetermined type of the instruction code includes an instruction code that generates the intermediate code over a plurality of periods when being executed.

3. The control device according to claim 1 or 2, wherein the predetermined type of the instruction code includes a waiting instruction code described using a waiting condition and a code determining whether the waiting condition is satisfied.

4. The control device according to any one of claims 1 to 3, wherein the second program includes a program described in an interpreter language.

5. The control device according to any one of claims 1 to 4, wherein the system service includes processing of a time series database that stores a record including data related to the control target in time series.

6. The control device according to claim 5, further comprising:
a data generation unit configured to generate data constituting a record stored in the time series database for each period; and
a non-blocking queue formed on a volatile main storage device that sequentially stores the data generated by the data generation unit,
wherein the system service includes processing for reading the data from the non-blocking queue and storing the read data in the time series database.

7. The control device according to claim 6, further comprising the time series database.

8. The control device according to claim 6 or 7, further comprising a remaining amount monitoring unit configured to monitor a remaining memory amount of the non-blocking queue,
wherein the switching unit causes the processor to interrupt the execution of the currently-executed second program to start the execution of the third program based on a result of comparison between the remaining memory amount and a threshold.

9. The control device according to any one of claims 1 to 8, wherein the first program includes an instruction code of the related processing executed when the execution of the second program is interrupted.

10. A program executed by a control device including a processor controlling a control target, the program comprising:
a scheduler program configured to manage a program executed by the processor according to a priority within a predetermined period;
a first program for real time control processing of the control target, the first program having a highest priority of execution executed by the processor in the period;
a second program for related processing related to the real time control, the second program having a lower priority of execution than that of the first program; and
a third program of a system service, the third program having a lower priority of execution than that of the second program and executed when a spare time of the processor exists in the period,
wherein the scheduler program includes a switch program that causes the processor to interrupt the execution of the second program to start the execution of the third program when the execution of the second program is started and then when a predetermined type of an instruction code is executed in the second program within the period.

11. A control method for controlling a control device including a processor controlling a control target,
the control device including
a first program for real time control processing of the control target, the first program having a highest priority of execution executed by the processor in a predetermined period,
a second program for related processing related to the real-time control, the second program having a lower priority of execution than that of the first program, and
a third program of a system service, the third program having a lower priority of execution than that of the second program and executed when there is a spare time of a processor in the period,
the control method comprising managing a program executed by the processor according to a priority within the period,
wherein the managing step includes
within the period,
starting the execution of the second program and then determining whether a predetermined type of an instruction code is executed in the second program, and
causing the processor to interrupt the execution of the second program to start the execution of the third program based on the determination.
